(19) Europäisches Patentamt / European Patent Office / Office européen des brevets

(11) **EP 4 637 138 A1**

(12) **EUROPEAN PATENT APPLICATION**

(43) Date of publication:
**22.10.2025 Bulletin 2025/43**

(21) Application number: **25158688.9**

(22) Date of filing: **18.02.2025**

(51) International Patent Classification (IPC):
*H04N 19/103* (2014.01)  *H04N 19/14* (2014.01)
*H04N 19/176* (2014.01)  *H04N 19/186* (2014.01)
*H04N 19/27* (2014.01)  *H04N 19/46* (2014.01)
*H04N 19/61* (2014.01)

(52) Cooperative Patent Classification (CPC):
**H04N 19/103; H04N 19/14; H04N 19/176;
H04N 19/186; H04N 19/27; H04N 19/46;
H04N 19/61**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.04.2024 US 202418636941**

(71) Applicant: **INTEL Corporation
Santa Clara, CA 95054 (US)**

(72) Inventors:
• **SUN, Minzhi**
  **Bellevue, WA, 98006 (US)**
• **ZHANG, Ximin**
  **San Jose, CA, 95129 (US)**
• **CHIU, Yi-jen**
  **San Jose, CA, 95129 (US)**
• **HOLLAND, James**
  **Folsom, CA, 95630 (US)**

(74) Representative: **Samson & Partner Patentanwälte
mbB
Widenmayerstraße 6
80538 München (DE)**

(54) **ADAPTIVE CODING TOOL SELECTION WITH CONTENT CLASSIFICATION**

(57)     A lightweight but effective adaptive coding tool selection system with content classification can be implemented to reduce complexity and maintain quality in a video encoder. Content classification may classify a current frame between at least three classifications: screen content, weak screen content, and natural content. Content classification may make use of two statistics, e.g., color number and variance, of blocks that are 8x8 pixels or larger in size. The statistics may be used to calculate three frame-level statistics, e.g., proportion/percentage of blocks with few colors, proportion/percentage of blocks with zero variance, and proportion/percentage of blocks with big/large variance. The frame-level statistics are used to classify the current frame. Based on the classification, coding tool control flags or control signals may be generated accordingly to configure the encoder to, e.g., turn on or off certain coding tools, and/or use certain parameter values for the coding tools.

FIG. 1

EP 4 637 138 A1

**Description**

Background

Video compression is a technique for making video files smaller and easier to transmit over the Internet. There are different methods and algorithms for video compression, with different performance and tradeoffs. Video compression involves encoding and decoding. Encoding is the process of transforming (uncompressed) video data into a compressed format. Decoding is the process of restoring video data from the compressed format. An encoder-decoder system is called a codec.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates an encoding system and a plurality of decoding systems, according to some embodiments of the disclosure.
FIG. 2 illustrates an exemplary encoder to encode video frames and output an encoded bitstream, according to some embodiments of the disclosure.
FIG. 3 illustrates an exemplary decoder to decode an encoded bitstream and output a decoded video, according to some embodiments of the disclosure.
FIG. 4 illustrates an exemplary encoder and an adaptive coding tool selector, according to some embodiments of the disclosure.
FIG. 5 illustrates an exemplary implementation of an adaptive coding tool selector, according to some embodiments of the disclosure.
FIG. 6 illustrates an exemplary implementation of a content classifier, according to some embodiments of the disclosure.
FIG. 7 depicts an exemplary process for classifying content, according to some embodiments of the disclosure.
FIG. 8 depicts an exemplary process for setting one or more coding tool control signals, according to some embodiments of the disclosure.
FIG. 9 depicts an exemplary process for setting one or more coding tool control signals, according to some embodiments of the disclosure.
FIG. 10 depicts an exemplary process for setting one or more coding tool control signals, according to some embodiments of the disclosure.
FIG. 11 illustrates a method to adaptively control coding tools of an encoder based on content classification, according to some embodiments of the disclosure.

FIG. 12 depicts a block diagram of an exemplary computing device, according to some embodiments of the disclosure.

Detailed Description

*Overview*

Video coding or video compression is the process of compressing video data for storage, transmission, and playback. Video compression may involve taking a large amount of raw video data and applying one or more compression techniques to reduce the amount of data needed to represent the video while maintaining an acceptable level of visual quality. In some cases, video compression can offer efficient storage and transmission of video content over limited bandwidth networks.

A video includes one or more (temporal) sequences of video frames or frames. A frame may include an image, or a single still image. A frame may have millions of pixels. For example, a frame for an uncompressed 4K video may have a resolution of 3840x2160 pixels. Pixels may have luma/luminance and chroma/chrominance values. The terms "frame" and "picture" may be used interchangeably. There are several frame types of picture types. I-frames or intra-frames may be least compressible and do not depend on other frames to decode. I-frames may include scene change frames. An I-frame may be a reference frame for one or more other frames. P-frames may depend on data from previous frames to decode and may be more compressible than I-frames. A P-frame may be a reference frame for one or more other frames. B-frames may depend on data from previous and forward frames to decode and may be more compressible than I-frames and P-frames. A B-frame can refer to two or more frames, such as one frame in the future and one frame in the past. Other frame types may include reference B-frame and non-reference B-frame. Reference B-frame can act as a reference for another frame. A non-reference B-frame is not used as a reference for any frame. Reference B-frames are stored in a decoded picture buffer whereas a non-reference B-frame does not need to be stored in the decoded picture buffer. P-frames and B-frames may be referred to as inter-frames. The order or encoding hierarchy in which I-frames, P-frames, and B-frames are arranged may be referred to as a group of pictures (GOP). In some cases, a frame may be an instantaneous decoder refresh (IDR) frame within a GOP. An IDR-frame can indicate that no frame after the IDR-frame can reference any frame before the IDR-frame. Therefore, an IDR-frame may signal to a decoder that the decoder may clear the decoded picture buffer. Every IDR-frame may be an I-frame, but an I-frame may or may not be an IDR-frame. A closed GOP may begin with an IDR-frame. A slice may be a spatially distinct region of a frame that is encoded separately from any other region in the same frame.

In some cases, a frame may be partitioned into one or more blocks. Blocks may be used for block-based compression. The blocks of pixels resulting from partitioning may be referred to as partitions. Blocks may have sizes which are much smaller, such as 512x512 pixels, 256x256 pixels, 128x128 pixels, 64x64 pixels, 32x32 pixels, 16x16pixels, 8x8 pixels, 4x4 pixels, etc. A block may include a square or rectangular region of a frame. Various video compression techniques may use different terminology for the blocks or different partitioning structures for creating the blocks. In some video compression techniques, a frame may be partitioned into Coding Tree Units (CTUs). A CTU may be divided (separately for luma and chroma components) into Coding Tree Blocks (CTBs). A CTB can have a size of 64x64 pixels, 32x32 pixels, or 16x16 pixels. A CTB can be divided into Coding Units (CUs). A CU can be divided into Prediction Units (PUs) and/or discrete cosine transforms (DCT) Transform Units (TUs). CTUs, CTBs, CUs, PUs, and TUs may be considered blocks or partitions herein.

Modern codecs can support a number of coding tools to improve the quality of the encoded bitstream. A coding tool may have one or more parameter values that can be used to adjust the coding tool to the data being encoded. One of the tasks of an encoder in a video codec is to make encoding decisions relating to the coding tools at different levels for the video (e.g., sequence-level, GOP-level, frame/picture-level, slice-level, CTU-level, CTB-level, block-level, CU-level, PU-level, TU-level, etc.), based on a desired bitrate and/or desired (objective and/or subjective) quality. Making encoding decisions may include evaluating different coding tool options or parameter values for encoding the data, and determining optimal coding tool options or parameter values that may achieve the desired bitrate and/or quality. The chosen coding tool option and/or parameter values may be applied to encode the video to generate a bitstream. The chosen coding tool option and/or parameter values would be encoded in the bitstream to signal to a decoder how to decode the encoded bitstream in accordance with the encoding decisions which were made by the encoder. While evaluating all possible combinations of options and parameter values may yield the most optimal encoding decision, an encoder does not have unlimited resources to afford the complexity that would be required to evaluate each available coding tool option and parameter value. While some codecs can achieve significant subjective quality improvement with similar bitrates compared to earlier codecs, the improvements came at a cost of added complexity in the encoder and decoder. It is a technical challenge to reduce complexity in the encoder while making little to no impact to the quality of the video.

Among the coding tools supported by modern codecs, many are broadly applicable to different types of video contents, but some coding tools may be particularly suited to certain types of video contents. For example, motion compensated temporal filter (MCTF) can help improve encoder efficiency greatly with natural (non-screen) content but can cause quality loss with screen content. Intra Block Copy (IBC) and palette coding in intra-prediction can perform well with screen content but may cause quality loss if applied to natural (non-screen) content. Luma Mapping with Chroma Scaling (LMCS) in in-loop filtering can perform well with natural content but is not very efficient with screen content. Moreover, the complexities associated with these coding tools are relatively high. To reduce the complexity in the encoder while maintaining quality improvements achievable by the modern codecs, these coding tools can be selectively turned on or off, adapted, or configured in a specific way that best suits the type of content being encoded. One of the technical challenges is to analyze the content before the encoding process, and based on the analysis, to detect or classify the content being encoded effectively and efficiently. Another one of the technical challenges is to implement a scheme that can control or configure the encoder based on and to suit the content classification.

Some neural network based solutions may analyze video content and perform content classification and screen content detection. However, as a pre-analysis operation before the encoder, neural network based solutions may be too heavy, incur long latency, and computationally intensive to be practical. For a hardware based encoder solution, it would be effective to implement a lightweight pre-analysis operation. In one solution involving statistics based on 4x4 pixels blocks, many calculations are needed to compute the statistics, and the statistics may lead to false classifications with natural content that has many black or dark homogeneous regions.

To address some of these concerns, a lightweight but effective adaptive coding tool selection system with content classification can be implemented. The system can have low complexity and may be hardware friendly. In particular, content classification may detect screen content, or classify one or more frames between at least three classifications: screen content classification (indicating strong screen content), weak screen content classification (indicating weak screen content), and natural content classification (indicating not screen content). Content classification may make use of two statistics, e.g., color number and variance, of blocks that are 8x8 pixels or larger in size (e.g., 8x8 blocks, 16x16 blocks, and 32x32 blocks). In some embodiments, the two statistics are calculated for individual 8x8 blocks of a current frame. In some embodiments, the two statistics are calculated for individual 16x16 blocks of a current frame. The statistics may be used to calculate three frame-level statistics, e.g., proportion/percentage of blocks with few colors, proportion/percentage of blocks with zero variance, and proportion/percentage of blocks with big/large variance. The frame-level statistics are used to determine which classification the one or more frames fall under. The frame-level statistics can be used to determine if a current frame has strong, weak, or no screen content. Based on the classification or detection result, coding tool control flags or control signals may be generated accordingly to cause configure an encoding system to, e.g., turn on or off certain coding tools, and/or use certain parameter values for the coding tools.

By adaptively selecting and configuring coding tools, the encoding efficiency improvement and complexity reduction can be achieved with a wide range of video content. The solutions described herein can be implemented as a standalone component in front of an encoder that supports the coding tools. The lightweight and hardware friendly solution can benefit encoders that operate with low latency and in real-time (e.g., in data center, server, or video streaming use cases).

Techniques for adaptive coding tool selection with content classification described and illustrated herein may be applied to a variety of codecs, such as AVC (Advanced Video Coding), HEVC (High Efficiency Video Coding), AV1 (AOMedia Video 1), and VVC (Versatile Video Coding). AVC, also known as "ITU-T H.264", was approved in 2003 and last revised 2021-08-22. HEVC, also known as "ITU-T H.265", was approved in 2013 and last revised 2023-09-13. AV1 is a video coding codec designed for video transmissions over the Internet. "AV1 Bitstream & Decoding Process Specification" version 1.1.1 with Errata was last modified in 2019. VVC, also known as "ITU-T H.266", was finalized in 2020.

*Video compression*

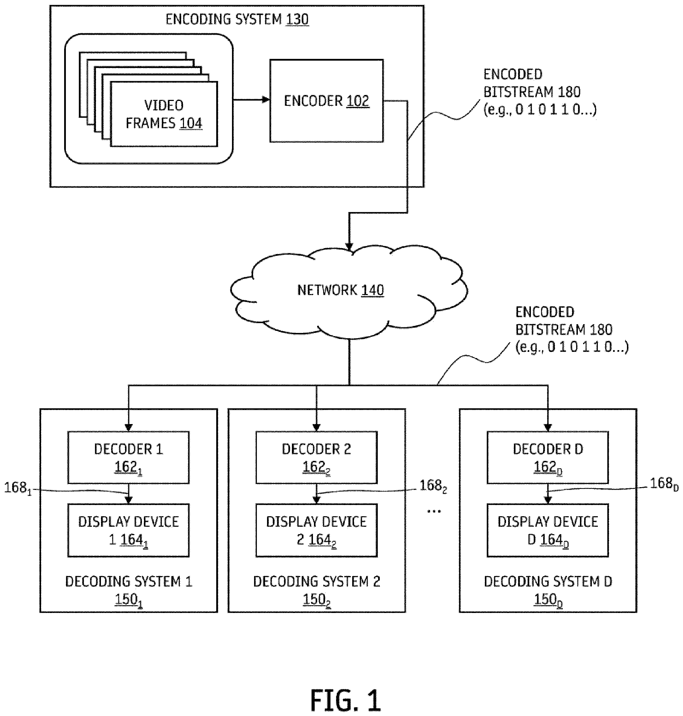

FIG. 1 illustrates encoding system 130 and one or more decoding systems $150_{1...D}$, according to some embodiments of the disclosure.

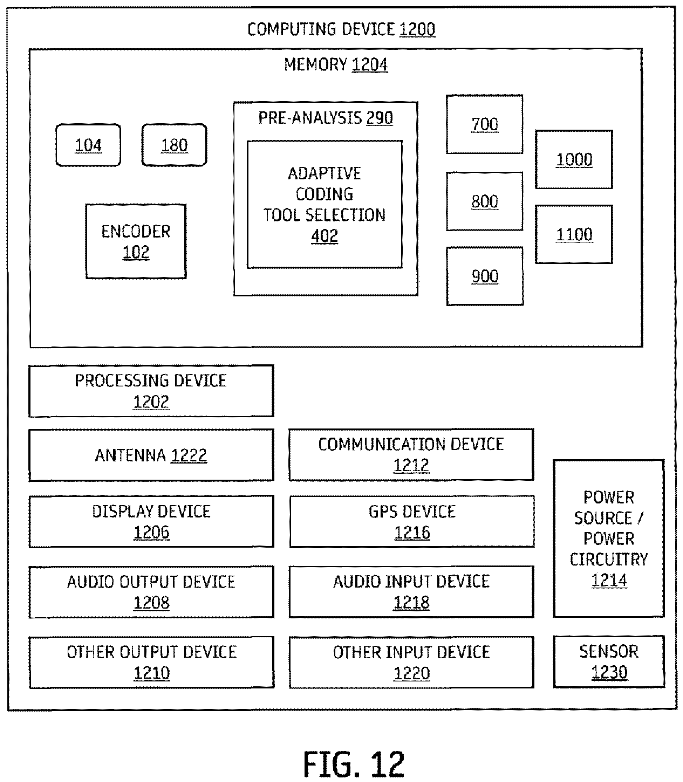

Encoding system 130 may be implemented on computing device 1200 of FIG. 12. Encoding system 130 can be implemented in the cloud or in a data center. Encoding system 130 can be implemented on a device that is used to capture the video. Encoding system 130 can be implemented on a standalone computing system. Encoding system 130 may perform the process of encoding in video compression. Encoding system 130 may receive a video (e.g., uncompressed video, original video, raw video, etc.) comprising a sequence of video frames 104. The video frames 104 may include image frames or images that make up the video. A video may have a frame rate or number of frames per second (FPS), that defines the number of frames per second of video. The higher the FPS, the more realistic and fluid the video looks. Typically, FPS is greater than 24 frames per second for a natural, realistic viewing experience to a human viewer. Examples of video may include a television episode, a movie, a short film, a short video (e.g., less than 15 seconds long), a video capturing gaming experience, computer-screen content, video conferencing content, live event broadcast content, sports content, a surveillance video, a video shot using a mobile computing device (e.g., a smartphone), etc. In some cases, video may include a mix or combination of different types of video.

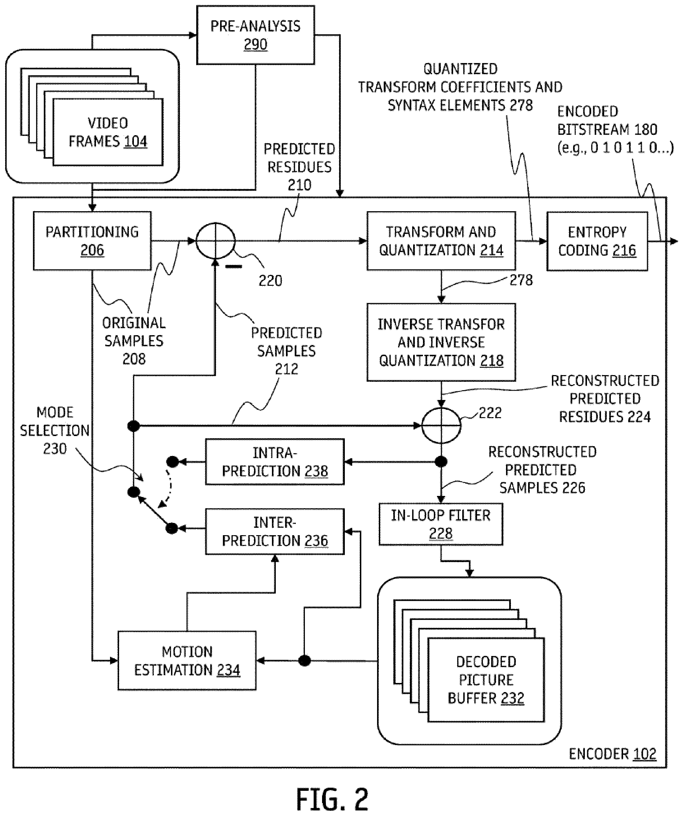

Encoding system 130 may include encoder 102 that receives video frames 104 and encodes video frames 104 into encoded bitstream 180. An exemplary implementation of encoder 102 is illustrated in FIG. 2.

Encoded bitstream 180 may be compressed, meaning that encoded bitstream 180 may be smaller in size than video frames 104. Encoded bitstream 180 may include a series of bits, e.g., having 0's and 1's. Encoded bitstream 180 may have header information, payload information, and footer information, which may be encoded as bits in the bitstream. Header information may provide information about one or more of: the format of encoded bitstream 180, the encoding process implemented in encoder 102, the parameters of encoder 102, and metadata of encoded bitstream 180. For example, header information may include one or more of: resolution information, frame rate, aspect ratio, color space, etc. Payload information may include data representing content of video frames 104, such as samples frames, symbols, syntax elements, etc. For example, payload information may include bits that encode one or more of motion predictors, transform coefficients, prediction modes, and quantization levels of video frames 104. Footer information may indicate an end of the encoded bitstream 180. Footer information may include other information including one or more of: checksums, error correction codes, and signatures. Format of encoded bitstream 180 may vary depending on the specification of the encoding and decoding process, i.e., the codec.

Encoded bitstream 180 may include packets, where encoded video data and signaling information may be packetized. One exemplary format is the Open Bitstream Unit (OBU), which is used in AV1 encoded bitstreams. An OBU may include a header and a payload. The header can include information about the OBU, such as information that indicates the type of OBU. Examples of OBU types may include sequence header OBU, frame header OBU, metadata OBU, temporal delimiter OBU, and tile group OBU. Payloads in OBUs may carry quantized transform coefficients and syntax elements that may be used in the decoder to properly decode the encoded video data to regenerate video frames.

Encoded bitstream 180 may be transmitted to one or more decoding systems $150_{1...D}$, via network 140. Network 140 may be the Internet. Network 140 may include one or more of: cellular data networks, wireless data networks, wired data networks, cable Internet networks, fiber optic networks, satellite Internet networks, etc.

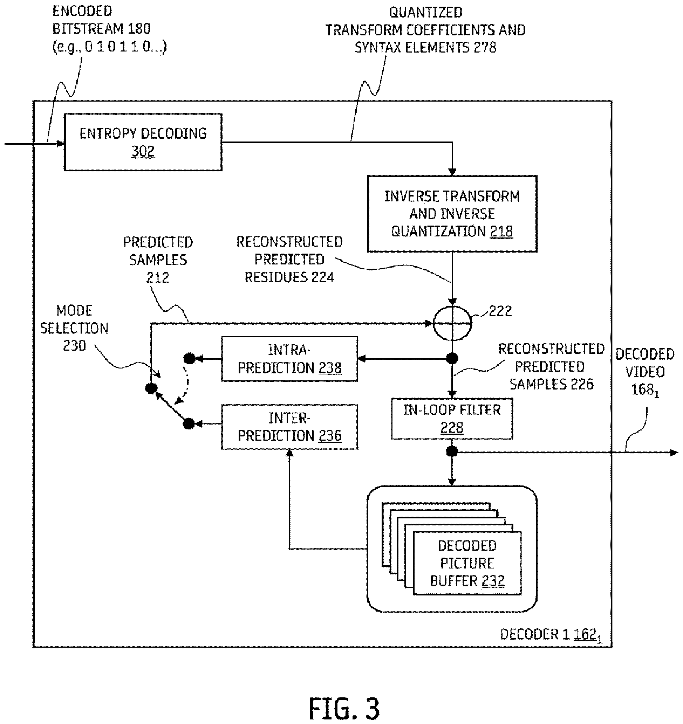

D number of decoding systems $150_{1...D}$ are illustrated. At least one of the decoding systems $150_{1...D}$ may be implemented on computing device 1200 of FIG. 12. Examples of systems $150_{1...D}$ may include personal computers, mobile computing devices, gaming devices, augmented reality devices, mixed reality devices, virtual reality devices, televisions, etc. Each one of decoding systems $150_{1...D}$ may perform the process of decoding in video compression. Each one of decoding systems $150_{1...D}$ may include a decoder (e.g., decoder 1...D $162_{1...D}$), and one or more display devices (e.g., display device 1...D $164_{1...D}$). An exemplary implementation of a decoder, e.g., decoder 1 $162_1$, is illustrated in FIG. 3.

For example, decoding system 1 $150_1$, may include decoder 1 $162_1$ and a display device 1 $164_1$. Decoder 1 $162_1$ may implement a decoding process of video compression. Decoder 1 $162_1$ may receive encoded bitstream 180 and produce decoded video $168_1$. Decoded video $168_1$ may include a series of video frames, which may be a version or reconstructed version of video frames 104 encoded by encoding system 130. Display device 1 $164_1$ may output the decoded video $168_1$ for display to one or more human viewers or users of decoding system 1 $150_1$.

For example, decoding system 2 $150_2$, may include decoder 2 $162_2$ and a display device 2 $164_2$. Decoder 2 $162_2$ may implement a decoding process of video compression. Decoder 2 $162_2$ may receive encoded bitstream 180 and produce decoded video $168_2$. Decoded video $168_2$ may include a series of video frames, which may be a version or reconstructed version of video frames 104 encoded by encoding system 130. Display device 2 $164_2$ may output the decoded video $168_2$ for display to one or more human viewers or users of decoding system 2 $150_2$.

For example, decoding system D $150_D$, may include decoder D $162_D$ and a display device D $164_D$. Decoder D $162_D$ may implement a decoding process of video compression. Decoder D $162_D$ may receive encoded bitstream 180 and produce decoded video $168_D$. Decoded video $168_D$ may include a series of video frames, which may be a version or reconstructed version of video frames 104 encoded by encoding system 130. Display device D $164_D$ may output the decoded video $168_D$ for display to one or more human viewers or users of decoding system D $150_D$.

*Video encoder*

FIG. 2 illustrates encoder 102 to encode video frames 104 and output an encoded bitstream, according to some embodiments of the disclosure. Encoder 102 may include one or more of: signal processing operations and data processing operations, including inter and intra-prediction, transform, quantization, in-loop filtering, and entropy coding. Encoder 102 may include a reconstruction loop involving inverse quantization, and inverse transformation to guarantee that the decoder would see the same reference blocks and frames. Encoder 102 may receive video frames 104 and encodes video frames 104 into encoded bitstream 180. Encoder 102 may include one or more of partitioning 206, transform and quantization 214, inverse transform and inverse quantization 218, in-loop filter 228, motion estimation 234, inter-prediction 236, intra-prediction 238, and entropy coding 216.

In some embodiments, video frames 104 may be processed by pre-analysis 290 before encoder 102 applies an encoding process. Pre-analysis 290 and encoder 102 may form encoding system 130 as seen in FIG. 1. Pre-analysis 290 may analyze video frames 104 to determine picture statistics that may be used to inform one or more encoding processes to be performed by one or more components in encoder 102. Pre-analysis 290 may determine information that may be used for quantization parameter (QP) adaptation, scene cut detection, and frame type adaptation. Pre-analysis 290 may determine for each frame, a recommended frame type. Pre-analysis 290 may apply MCTF to denoise video frames 104. Filtered versions of video frames 104 with MCTF applied may be provided to encoder 102 as the input video frames (instead of video frames 104), e.g., to partitioning 206. MCTF may include a motion estimation analysis operation and a bilateral filtering operation. MCTF may attenuate random picture components in a motion aware fashion to improve coding efficiency. MCTF may operate on blocks of 8x8 pixels, or 16x16 pixels. MCTF may operate separately on luminance values and chroma values. MCTF may be applied in three dimensions (e.g., spatial directions and a temporal direction). MCTF may produce a noise estimate of various blocks.

Partitioning 206 may divide a frame in video frames 104 (or filtered version of video frames 104 from pre-analysis 290) into blocks of pixels. Different codecs may allow different variable range of block sizes. In one codec, a frame may be partitioned by partitioning 206 into blocks of size 128x128 or 64x64 pixels. In some cases, a frame may be partitioned by partitioning 206 into blocks of 256x256 or 512x512 pixels. In some cases, a frame may be partitioned by partitioning 206 into blocks of 32x32 or 16x16 pixels. Large blocks may be referred to as superblocks, macroblocks, or CTBs. Partitioning 206 may further divide each large block using a multi-way partition tree structure. In some cases, a partition of a superblock can be recursively divided further by partitioning 206 using the multi-way partition tree structure (e.g., down to 4x4 size blocks/partitions). In another codec, a frame may be partitioned by partitioning 206 into CTUs of size 128x128 pixels. Partitioning 206 may divide a CTU using a quadtree partitioning structure into four CUs. Partitioning 206 may further recursively divide a CU using the quadtree partitioning structure. Partitioning 206 may (further) subdivide a CU using a multi-type tree structure (e.g., a quadtree, a binary tree, or ternary tree structure). A smallest CU may have a size of 4x4 pixels. A CU may be referred to herein as a block or a partition. Partitioning 206 may output original samples 208, e.g., as blocks of pixels, or partitions.

In VVC, a frame in video frames 104 may be partitioned into a plurality of nonoverlapping CTUs. A CTU have a specified size, such as 128x128 pixels, or 64x64 pixels. The CTU can be recursively split into smaller blocks or partitions using different types of partitioning shapes. A CTU may be partitioned using a quadtree partitioning structure into 4 CUs. One or more of the CUs obtained through the quadtree partitioning structure can be recursively divided (e.g., up to three times) into smaller CUs using one of the multi-type structures, including, e.g., a quadtree, a binary tree, or ternary tree structure to support non-square partitions. A quadtree partitioning structure can partition a CU into 4 CUs. A binary tree partitioning structure can partition a CU into 2 CUs (e.g., divided horizontally or vertically). A ternary tree structure can partition a CU into 3 CUs (e.g., divided horizontally or vertically). A smallest CU (e.g., referred to as a block or a partition) may have a size of 4x4 pixels. CUs may be larger than 4x4 pixels. It can be appreciated that a CTU may be partitioned into CUs through many different feasible partition combinations. A CTU may be partitioned in many different ways, resulting in many different partitioned results.

In some cases, one or more operations in partitioning 206 may be implemented in intra-prediction 238 and/or inter-prediction 236.

Intra-prediction 238 may predict samples of a block or partition from reconstructed predicted samples of previously encoded spatial neighboring/reference blocks of the same frame. Intra-prediction 238 may receive reconstructed predicted samples 226 (of previously encoded spatial neighbor blocks of the same frame). Reconstructed predicted samples 226 may be generated by summer 222 from reconstructed predicted residues 224 and predicted samples 212. Intra-prediction 238 may determine a suitable predictor for predicting the samples from reconstructed predicted samples of previously encoded spatial neighboring/reference blocks of the same frame (thus making an intra-prediction decision). Intra-prediction 238 may generate predicted samples 212 generated using the suitable predictor. Intra-prediction 238 may output or identify the neighboring/reference block and a predictor used in generating the predicted samples 212. The identified neighboring/reference block and predictor may be encoded in the encoded bitstream 180 to enable a decoder to reconstruct a block using the same neighboring/reference block and predictor. In one codec, intra-prediction 238 may support a number of diverse predictors, e.g., 56 different predictors. In one codec, intra-prediction 238 may support a number of diverse predictors, e.g., 95 different predictors. Some predictors, e.g., directional predictors, may capture different spatial redundancies in directional textures. Pixel values of a block can be predicted using a directional predictor in intra-prediction 238 by extrapolating pixel values of a neighboring/reference block along a certain direction. Intra-prediction 238 of different codecs may support different sets of predictors to exploit different spatial patterns within the same frame. Examples of predictors may include direct current (DC), planar, Paeth, smooth, smooth vertical, smooth horizontal, recursive-based filtering modes, chroma-from-luma, IBC, color palette or palette coding, multiple-reference line, intra sub-partition, matrix-based intra-prediction (matrix coefficients may be defined by offline training using neural networks), angular prediction, wide-angle prediction, cross-component linear model, template matching, etc. IBC works by copying a reference block within the same frame to predict a current block. Palette coding or palette mode works by using a color palette having a few colors (e.g., 2-8 colors), and encoding a current block using indices to the color palette. In some cases, intra-prediction 238 may perform block-prediction, where a predicted block may be produced from a reconstructed neighboring/reference block of the same frame using a vector. Optionally, an interpolation filter of a certain type may be applied to the predicted block to blend pixels of the predicted block. Pixel values of a block can be predicted using a vector compensation process in intra-prediction 238 by translating a neighboring/reference block (within the same frame) according to the vector (and optionally applying an interpolation filter to the neighboring/reference block) to produce predicted samples 212. Intra-prediction 238 may output or identify the vector applied in generating predicted samples 212. In some codecs, intra-prediction 238 may encode (1) a residual vector generated from the applied vector and a vector predictor candidate, and (2) information that identifies the vector predictor candidate, rather than encoding the applied vector itself. Intra-prediction 238 may output or identify an interpolation filter type applied in generating predicted samples 212.

Motion estimation 234 and inter-prediction 236 may predict samples of a block from samples of previously encoded frames, e.g., reference frames in decoded picture buffer 232. Motion estimation 234 and inter-prediction 236 may perform operations to make inter-prediction decisions or inter-prediction decisions. Motion estimation 234 may perform motion analysis and determine motion information for a current frame. Motion estimation 234 may determine a motion field for a current frame. A motion field may include motion vectors for blocks of a current frame. Motion estimation 234 may determine an average magnitude of motion vectors of a current frame. Motion estimation 234 may determine motion information, which may indicate how much motion is present in a current frame (e.g., large motion, very dynamic motion, small/little motion, very static).

Motion estimation 234 and inter-prediction 236 may perform motion compensation, which may involve identifying a suitable reference block and a suitable motion predictor (or motion vector predictor) for a block and optionally an interpolation filter to be applied to the reference block. Motion estimation 234 may receive original samples 208 from partitioning 206. Motion estimation 234 may receive samples from decoded picture buffer 232 (e.g., samples of previously encoded frames or reference frames). Motion estimation 234 may use a number of reference frames for determining one or more suitable motion predictors. A motion predictor may include a reference block and a motion vector that can be applied to generate a motion compensated block or predicted block. Motion predictors may include motion vectors that capture the movement of blocks between frames in a video. Motion estimation 234 may output or identify one or more reference frames and one or more suitable motion predictors. Inter-prediction 236 may apply the one or more suitable motion predictors determined in motion estimation 234 and one or more reference frames to generate predicted samples 212. The identified reference frame(s) and motion predictor(s) may be encoded in the encoded bitstream 180 to enable a decoder to reconstruct a block using the same reference frame(s) and motion predictor(s). In one codec, motion estimation 234 may implement single reference frame prediction mode, where a single reference frame with a corresponding motion predictor is used for inter-prediction 236. Motion estimation 234 may implement compound reference frame prediction mode where two reference frames with two corresponding motion predictors are used for inter-prediction 236. In one codec, motion estimation 234 may implement techniques for searching and identifying good reference frame(s) that can yield the most efficient motion predictor. The techniques in motion estimation 234 may include searching for good reference frame(s) candidates spatially (within the same frame) and temporally (in previously encoded frames). The techniques in motion estimation 234 may include searching a deep spatial neighborhood to find a spatial candidate pool. The techniques in motion estimation 234 may include utilizing temporal motion field estimation mechanisms to generate a temporal candidate pool. The techniques in motion estimation 234 may use a motion field estimation process. After temporal and spatial candidates may be ranked and a suitable motion predictor may be determined. In one codec, inter-prediction 236 may support a number of diverse motion predictors. Examples of predictors may include geometric motion vectors (complex, non-linear motion), warped motion compensation (affine transformations that capture non-translational object movements), overlapped block motion compensation, advanced compound prediction (compound wedge prediction, difference-modulated masked prediction, frame distance-based compound prediction, and compound inter-intra-prediction), dynamic spatial and temporal motion vector referencing, affine motion compensation (capturing higher-order motion such as rotation, scaling, and sheering), adaptive motion vector resolution modes, geometric partitioning modes, bidirectional optical flow, prediction refinement with optical flow, bi-prediction with weights, extended merge prediction, etc. Optionally, an interpolation filter of a certain type may be applied to the predicted block to blend pixels of the predicted block. Pixel values of a block can be predicted using the motion predictor/vector determined in a motion compensation process in motion estimation 234 and inter-prediction 236 and optionally applying an interpolation filter. In some cases, inter-prediction 236 may perform motion compensation, where a predicted block may be produced from a reconstructed reference block of a reference frame using the motion predictor/vector. Inter-prediction 236 may output or identify the motion predictor/vector applied in generating predicted samples 212. In some codecs, inter-prediction 236 may encode (1) a residual vector generated from the applied vector and a vector predictor candidate, and (2) information that identifies the vector predictor candidate, rather than encoding the applied vector itself. Inter-prediction 236 may output or identify an interpolation filter type applied in generating predicted samples 212.

Mode selection 230 may be informed by components such as motion estimation 234 to determine whether inter-prediction 236 or intra-prediction 238 may be more efficient for encoding a block (thus making an encoding decision). Inter-prediction 236 may output predicted samples 212 of a predicted block. Inter-prediction 236 may output a selected predictor and a selected interpolation filter (if applicable) that may be used to generate the predicted block. Intra-prediction 238 may output predicted samples 212 of a predicted block. Intra-prediction 238 may output a selected predictor and a selected interpolation filter (if applicable) that may be used to generate the predicted block. Regardless of the mode, predicted residues 210 may be generated by subtractor 220 by subtracting original samples 208 by predicted samples 212. In some cases, predicted residues 210 may include residual vectors from inter-prediction 236 and/or intra-prediction 238.

Transform and quantization 214 may receive predicted residues 210. Predicted residues 210 may be generated by subtractor 220 that takes original samples 208 and subtracts predicted samples 212 to output predicted residues 210. Predicted residues 210 may be referred to as prediction error of the intra-prediction 238 and inter-prediction 236 (e.g., error between the original samples and predicted samples 212). Prediction error has a smaller range of values than the original samples and can be coded with fewer bits in encoded bitstream 180. Transform and quantization 214 may include one or more of transforming and quantizing. Transforming may include converting the predicted residues 210 from the spatial domain to the frequency domain. Transforming may include applying one or more transform kernels. Examples of transform kernels may include horizontal and vertical forms of DCT, asymmetrical discrete sine transform (ADST), flip ADST, and identity transform (IDTX), multiple transform selection, low-frequency non-separatable transform, subblock transform, non-square transforms, DCT-VIII, discrete sine transform VII (DST-VII), discrete wavelet transform (DWT), etc. Transforming may convert the predicted residues 210 into transform coefficients. Quantizing may quantize the transformed coefficients, e.g., by reducing the precision of the transform coefficients. Quantizing may include using quantization matrices (e.g., linear and non-linear quantization matrices). The elements in the quantization matrix can be larger for higher frequency bands and smaller for lower frequency bands, which means that the higher frequency coefficients are more coarsely quantized, and the lower frequency coefficients are more finely quantized. Quantizing may include dividing each transform coefficient by a corresponding element in the quantization matrix and rounding to the nearest integer. Effectively, the quantization matrices may implement different QPs for different frequency bands and chroma planes and can use spatial prediction. A suitable quantization matrix can be selected and signaled for each frame and encoded in encoded bitstream 180. Transform and quantization 214 may output quantized transform coefficients and syntax elements 278 that indicate the coding modes and parameters used in the encoding process implemented in encoder 102.

Inverse transform and inverse quantization 218 may apply the inverse operations performed in transform and quantization 214 to produce reconstructed predicted residues 224 as part of a reconstruction path to produce decoded picture buffer 232 for encoder 102. Inverse transform and inverse quantization 218 may receive quantized transform coefficients and syntax elements 278. Inverse transform and inverse quantization 218 may perform one or more inverse quantization operations, e.g., applying an inverse quantization matrix, to obtain the unquantized/original transform coefficients. Inverse transform and inverse quantization 218 may perform one or more inverse transform operations, e.g., inverse transform (e.g., inverse DCT, inverse DWT, etc.), to obtain reconstructed predicted residues 224. A reconstruction path is provided in encoder 102 to generate reference blocks and frames, which are stored in decoded picture buffer 232. The reference blocks and frames may match the blocks and frames to be generated in the decoder. The reference blocks and frames are used as reference blocks and frames by motion estimation 234, inter-prediction 236, and intra-prediction 238.

In-loop filter 228 may implement filters to smooth out artifacts introduced by the encoding process in encoder 102 (e.g., processing performed by partitioning 206 and transform and quantization 214). In-loop filter 228 may receive reconstructed predicted samples 226 from summer 222 and output frames to decoded picture buffer 232. Examples of in-loop filters may include constrained low-pass filter, directional deringing filter, edge-directed conditional replacement filter, loop restoration filter, Wiener filter, self-guided restoration filters, constrained directional enhancement filter (CDEF), LMCS filter, Sample Adaptive Offset (SAO) filter, Adaptive Loop Filter (ALF), cross-component ALF, low-pass filter, deblocking filter, etc. For example, applying a deblocking filter across a boundary between two blocks can resolve blocky artifacts caused by the Gibbs phenomenon. In some embodiments, in-loop filter 228 may fetch data from a frame buffer having reconstructed predicted samples 226 of various blocks of a video frame. In-loop filter 228 may determine whether to apply an in-loop filter or not. In-loop filter 228 may determine one or more suitable filters that achieve good visual quality and/or one or more suitable filters that suitably remove the artifacts introduced by the encoding process in encoder 102. In-loop filter 228 may determine a type of an in-loop filter to apply across a boundary between two blocks. In-loop filter 228 may determine one or more strengths of an in-loop filter (e.g., filter coefficients) to apply across a boundary between two blocks based on the reconstructed predicted samples 226 of the two blocks. In some cases, in-loop filter 228 may take a desired bitrate into account when determining one or more suitable filters. In some cases, in-loop filter 228 may take a specified QP into account when determining one or more suitable filters. In-loop filter 228 may apply one or more (suitable) filters across a boundary that separates two blocks. After applying the one or more (suitable) filters, in-loop filter 228 may write (filtered) reconstructed samples to a frame buffer such as decoded picture buffer 232.

Entropy coding 216 may receive quantized transform coefficients and syntax elements 278 (e.g., referred to herein as symbols) and perform entropy coding. Entropy coding 216 may generate and output encoded bitstream 180. Entropy coding 216 may exploit statistical redundancy and apply lossless algorithms to encode the symbols and produce a compressed bitstream, e.g., encoded bitstream 180. Entropy coding 216 may implement some version of arithmetic coding. Different versions may have different pros and cons. In one codec, entropy coding 216 may implement (symbol to symbol) adaptive multi-symbol arithmetic coding. In another codec, entropy coding 216 may implement context-based adaptive binary arithmetic coder (CABAC). Binary arithmetic coding differs from multi-symbol arithmetic coding. Binary arithmetic coding encodes only a bit at a time, e.g., having either a binary value of 0 or 1. Binary arithmetic coding may first convert each symbol into a binary representation (e.g., using a fixed number of bits per-symbol). Handling just binary value of 0 or 1 can simplify computation and reduce complexity. Binary arithmetic coding may assign a probability to each binary value (e.g., a chance of the bit having a binary value of 0 and a chance of the bit having a binary value of 1). Multi-symbol arithmetic coding performs encoding for an alphabet having at least two or three symbol values and assigns a probability to each symbol value in the alphabet. Multi-symbol arithmetic coding can encode more bits at a time, which may result in a fewer number of operations for encoding the same amount of data. Multi-symbol arithmetic coding can require more computation and storage (since probability estimates may be updated for every element in the alphabet). Maintaining and updating probabilities (e.g., cumulative probability estimates) for each possible symbol value in multi-symbol arithmetic coding can be more complex (e.g., complexity grows with alphabet size). Multi-symbol arithmetic coding is not to be confused with binary arithmetic coding, as the two different entropy coding processes are implemented differently and can result in different encoded bitstreams for the same set of quantized transform coefficients and syntax elements 278.

*Video decoder*

FIG. 3 illustrates decoder 1 $162_1$ to decode an encoded bitstream and output a decoded video, according to some embodiments of the disclosure. Decoder 1 $162_1$ may include one or more of: signal processing operations and data processing operations, including entropy decoding, inverse transform, inverse quantization, inter and intra-prediction, in-loop filtering, etc. Decoder 1 $162_1$ may have signal and data processing operations that mirror the operations performed in the encoder. Decoder 1 $162_1$ may apply signal and data processing operations that are signaled in encoded bitstream 180 to reconstruct the video. Decoder 1 $162_1$ may receive encoded bitstream 180 and generate and output decoded video $168_1$ having a plurality of video frames. The decoded video $168_1$ may be provided to one or more display devices for display to one or more human viewers. Decoder 1 $162_1$ may include one or more of entropy decoding 302, inverse transform and inverse quantization 218, in-loop filter 228, inter-prediction 236, and intra-prediction 238. Some of the functionalities are previously described and used in the encoder, such as encoder 102 of FIG. 2.

Entropy decoding 302 may decode the encoded bitstream 180 and output symbols that were coded in the encoded bitstream 180. The symbols may include quantized transform coefficients and syntax elements 278. Entropy decoding 302 may reconstruct the symbols from the encoded bitstream 180.

Inverse transform and inverse quantization 218 may receive quantized transform coefficients and syntax elements 278 and perform operations which are performed in the encoder. Inverse transform and inverse quantization 218 may output reconstructed predicted residues 224. Summer 222 may receive reconstructed predicted residues 224 and predicted samples 212 and generate reconstructed predicted samples 226. Inverse transform and inverse quantization 218 may output syntax elements 278 having signaling information for informing/instructing/controlling operations in decoder 1 $162_1$ such as mode selection 230, intra-prediction 238, inter-prediction 236, and in-loop filter 228.

Depending on the prediction modes signaled in the encoded bitstream 180 (e.g., as syntax elements in quantized transform coefficients and syntax elements 278), intra-prediction 238 or inter-prediction 236 may be applied to generate predicted samples 212.

Summer 222 may sum predicted samples 212 of a decoded reference block and reconstructed predicted residues 224 to produce reconstructed predicted samples 226 of a reconstructed block. For intra-prediction 238, the decoded reference block may be in the same frame as the block that is being decoded or reconstructed. For inter-prediction 236, the decoded reference block may be in a different (reference) frame in decoded picture buffer 232.

Intra-prediction 238 may determine a reconstructed vector based on a residual vector and a selected vector predictor candidate. Intra-prediction 238 may apply a reconstructed predictor or vector (e.g., in accordance with signaled predictor information) to the reconstructed block, which may be generated using a decoded reference block of the same frame. Intra-prediction 238 may apply a suitable interpolation filter type (e.g., in accordance with signaled interpolation filter information) to the reconstructed block to generate predicted samples 212.

Inter-prediction 236 may determine a reconstructed vector based on a residual vector and a selected vector predictor candidate. Inter-prediction 236 may apply a reconstructed predictor or vector (e.g., in accordance with signaled predictor information) to a reconstructed block, which may be generated using a decoded reference block of a different frame from decoded picture buffer 232. Inter-prediction 236 may apply a suitable interpolation filter type (e.g., in accordance with signaled interpolation filter information) to the reconstructed block to generate predicted samples 212.

In-loop filter 228 may receive reconstructed predicted samples 226. In-loop filter 228 may apply one or more filters signaled in the encoded bitstream 180 to the reconstructed predicted samples 226. In-loop filter 228 may output decoded video $168_1$.

*Coding tools in an encoding system that are not suitable for all types of contents*

Referring back to FIG. 2, MCTF in pre-analysis 290 can help improve encoder efficiency greatly with natural (non-screen) content but can cause quality loss with screen content. Also, MCTF is computationally very intensive. In some cases, MCTF may be implemented in encoder 102 of FIG. 1, which may also share similar characteristics as MCTF in pre-analysis 290.

Continuing to refer to FIG. 2, IBC and palette coding in intra-prediction 238 can perform well with screen content but may cause quality loss if applied to natural (non-screen) content. Evaluating IBC and palette coding at the frame-level and at the block-level adds complexity to the encoder. Each coding tool may have a significant search space to consider when determining the optimal reference block and/or parameter values to apply. In addition, the coding tools add additional options for the encoder to consider for rate-distortion optimization.

Continuing to refer to FIG. 2, LMCS in in-loop filter 228 can perform well with natural content but is not very efficient with screen content. Whether to apply LMCS is an additional encoding decision for the encoder to consider for rate-distortion optimization.

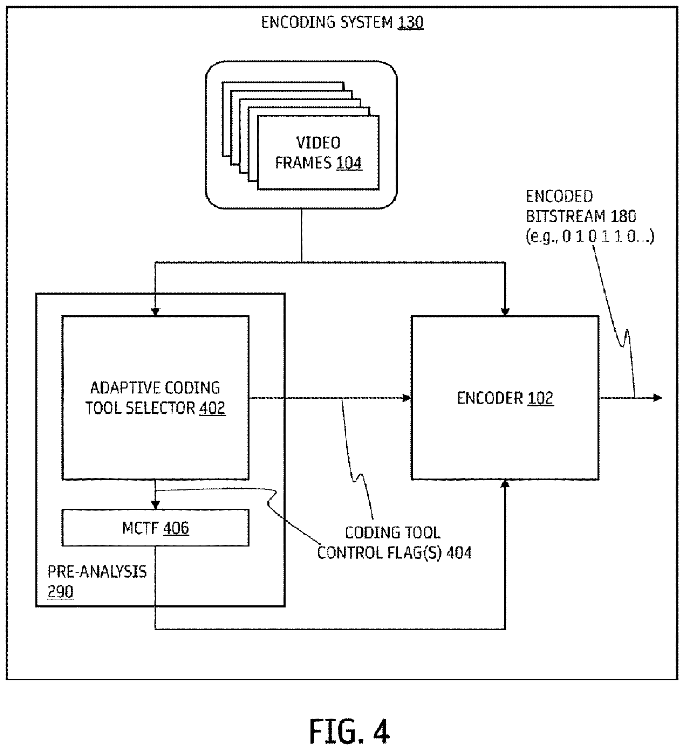

It would be beneficial for the encoding system (e.g., encoding system 130 of FIG. 1, or encoding system formed by pre-analysis 290 and encoder 102) to be able to disable or enable certain coding tools or configure the coding tools based on the type of content in video frames 104 being encoded. Complexity of the encoder would be significantly reduced, while the encoder quality can be maintained. However, it is not trivial to implement an effective (e.g., accurate) and efficient scheme for content classification and control flags/signals generation. Various embodiments described and illustrated in FIGS. 4-11 can address this technical challenge.

*Encoding system with pre-analysis and encoder*

FIG. 4 illustrates encoder 102 and adaptive coding tool selector 402, according to some embodiments of the disclosure. In some embodiments, adaptive coding tool selector 402 may be included before encoder 102 as part of pre-analysis 290. Encoder 102 and adaptive coding tool selector 402 may form encoding system 130. Video frames 104 may be provided to adaptive coding tool selector 402. Video frames 104 may also be provided to encoder 102.

Video frames 104 may be processed and/or analyzed by adaptive coding tool selector 402. Adaptive coding tool selector 402 may set, generate, and/or output one or more coding tool control flags 404. One or more coding tool control flags 404 may serve as control signals or signals that may be used by an encoding system 130 (e.g., encoder 102 and pre-analysis 290) having one or more coding tools to configure the one or more coding tools. One or more coding tool control flags 404 may indicate one or more on/off decisions for the one or more coding tools. One or more coding tool control flags 404 may include one or more parameter values (or configuration settings) for the one or more coding tools. Encoder 102 may respect one or more coding tool control flags 404 to configure one or more coding tools accordingly. Pre-analysis 290 may respect one or more coding tool control flags 404 to configure one or more coding tools accordingly. Configuration of one or more coding tools may include turning on or enabling a coding tool. Configuration of one or more coding tools may include turning off or disabling a coding tool. Configuration of one or more coding tools may include configuring a coding tool to use one or more parameter values (e.g., one or more configuration settings).

In some cases, one or more coding tool control flags 404 may signal information about the type of content in video frames 104. One or more components in pre-analysis 290 and encoder 102 may derive one or more configuration commands based on one or more coding tool control flags 404. The configuration commands may be executed by the one or more components in pre-analysis 290 and encoder 102 to configure the one or more components in pre-analysis 290 and encoder 102 in a certain way based on the information about the type of content in video frames 104.

One or more coding tool control flags 404 may be provided to MCTF 406 in pre-analysis 290. One or more coding tool control flags 404 may turn on or off (e.g., enable or disable) MCTF 406 in pre-analysis 290. In some cases, one or more coding tool control flags 404 may turn on or off (e.g., enable or disable) MCTF implemented in encoder 102. One or more coding tool control flags 404 may specify a parameter value, such as a strength parameter value for MCTF 406 in pre-analysis 290 (e.g., which may impact the strength or coefficients of filtering performed in MCTF 406). One or more coding tool control flags 404 may specify a parameter value, such as a strength parameter for MCTF implemented in encoder 102.

One or more coding tool control flags 404 may be provided to one or more components in encoder 102. One or more coding tool control flags 404 may turn on or off (e.g., enable or disable) one or more coding tools in encoder 102. One or more coding tool control flags 404 may specify a parameter value, such as a strength parameter, for one or more coding tools in encoder 102 (e.g., which may impact the strength or coefficients of filtering performed in encoder 102).

If one or more coding tool control flags 404 enables MCTF 406, MCTF 406 may produce a filtered version of video frames 104. The filtered version of video frames 104 generated by MCTF 406 may be provided to encoder 102. Encoder 102 may receive and use the filtered version of video frames 104 instead of original video frames 104. If one or more coding tool control flags 404 disables MCTF 406, encoder 102 may receive and use original video frames 104.

*Adaptive coding tool selector*

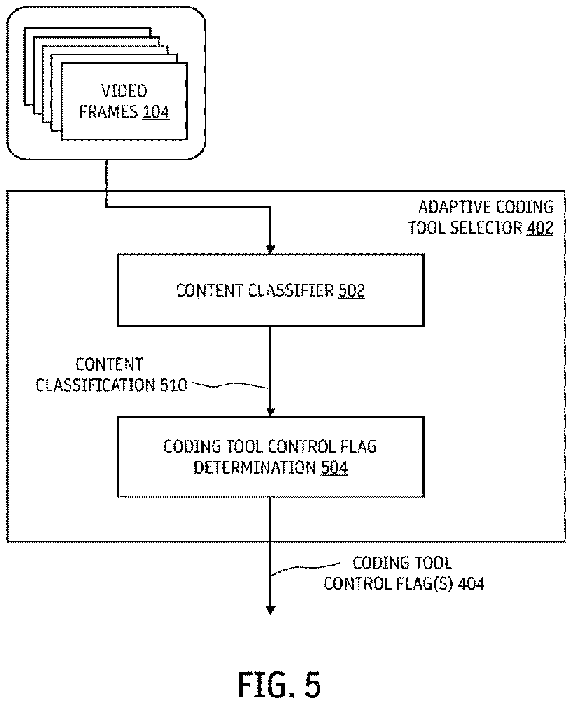

FIG. 5 illustrates an exemplary implementation of adaptive coding tool selector 402, according to some embodiments of the disclosure. Adaptive coding tool selector 402 can include content classifier 502. Adaptive coding tool selector 402 can include coding tool control flag determination 504.

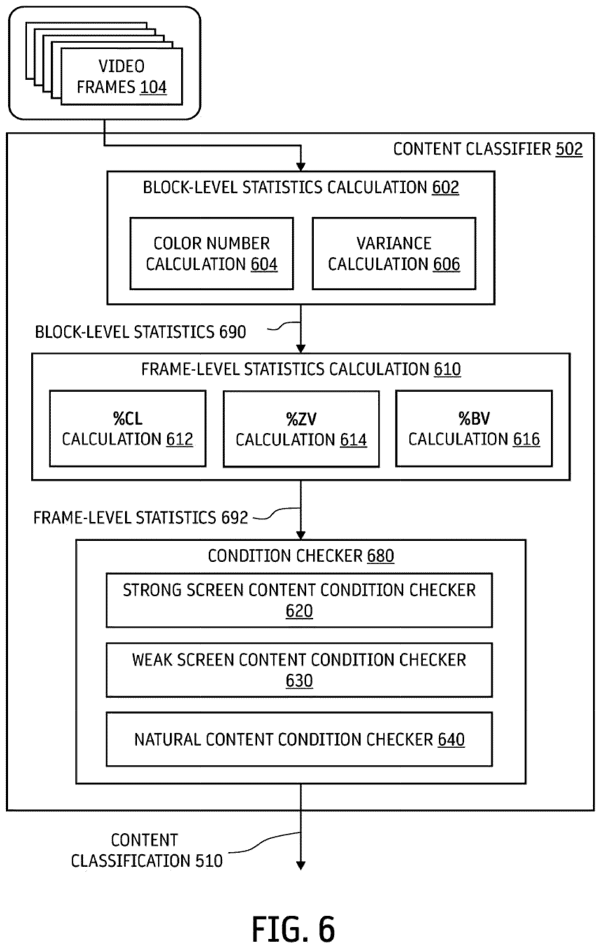

Content classifier 502 may receive video frames 104. Content classifier 502 may analyze video frames 104 and detect whether a current frame has strong screen content, weak screen content, or no screen content (or natural content). In some cases, content classifier 502 may analyze video frames 104 to classify a current frame into one of three classifications: strong screen content classification, a weak screen content classification, and natural content classification. Content classifier 502 may analyze video frames 104 to determine whether a current frame falls under strong screen content classification, a weak screen content classification, or natural content classification. Content classifier 502 may compute or calculate statistics about the frame and utilize the statistics to perform classification. Content classifier 502 may generate and/or output content classification 510. Implementation details of content classifier 502 are further illustrated in FIGS. 6-7.

Coding tool control flag determination 504 may receive content classification 510 and generate one or more coding tool control flags 404 according to content classification 510. For example, coding tool control flag determination 504 may set one or more coding tool control flags 404 based on content classification 510 or the classifying performed in content classifier 502. Based on content classification 510, coding tool control flag determination 504 may make one or more decisions about one or more coding tools based on content classification 510. Coding tool control flag determination 504 may set one or more values for one or more coding tool control flags 404 according to the one or more decisions.

In some embodiments, coding tool control flag determination 504 may decide whether to enable or disable MCTF, based on content classification 510. Coding tool control flag determination 504 may set a value for **MCTF_FLAG** accordingly. Coding tool control flag determination 504 may make a decision for MCTF on a frame-by-frame basis.

In some embodiments, coding tool control flag determination 504 may decide on a strength of MCTF if MCTF is enabled, based on content classification 510. Coding tool control flag determination 504 may set a value for **MCTF_STRENGTH** accordingly. Coding tool control flag determination 504 may make a decision for MCTF strength on a frame-by-frame basis.

In some embodiments, coding tool control flag determination 504 may decide whether to enable or disable LMCS, based on content classification 510. Coding tool control flag determination 504 may set a value for **LMCS_FLAG** accordingly. Coding tool control flag determination 504 may make a decision for LMCS on a frame-by-frame basis.

In some embodiments, coding tool control flag determination 504 may decide whether to enable or disable IBC and palette coding, based on content classification 510. Coding tool control flag determination 504 may set a value for **IBC_FLAG** and **PALETTECODING_FLAG** accordingly. In some cases, coding tool control flag determination 504 may make decisions on IBC and palette coding based on a first frame and/or an IDR-frame in a GOP or set of video frames, and the decisions may be applied as the default to all other frames in the GOP or set of video frames. Coding tool control flag determination 504 may modify the default decisions in certain scenarios.

### *Content classification*

FIG. 6 illustrates an exemplary implementation of content classifier 502, according to some embodiments of the disclosure.

Content classifier 502 may include block-level statistics calculation 602. Block-level statistics calculation 602 may divide a current video frame in video frames 104 into blocks (or pixel blocks), where the blocks may be 8x8 pixels in size. Using 8x8 blocks may be particularly effective because some coding tools (e.g., MCTF) may operate on 8x8 pixel blocks. Using 8x8 blocks or larger blocks may be particularly effective because 8x8 blocks or larger blocks may be better at characterizing the current frame than 4x4 blocks, which may be prone to capturing false-positive or noisy information in the frame. In some cases, the blocks may be 8x8 pixels in size or larger, such as 16x16 pixels. Block-level statistics calculation 602 may calculate or compute two or more statistics for one or more pixel blocks of the current frame. Block-level statistics calculation 602 may calculate two or more statistics for each block. In some cases, the one or more pixel blocks comprises luma/luminance pixel values. In some cases, the one or more pixel blocks comprises chroma/chrominance pixel values. In some cases, block-level statistics calculation 602 may consider luma/luminance pixel values only. In some cases, the two or more statistics may already be available or calculated for other purposes in an encoder system. In some cases, the two or more statistics may be easily and quickly calculated without requiring heavy computations. Block-level statistics calculation 602 may generate and/or output block-level statistics 690.

The two or more statistics may include a color number. Block-level statistics calculation 602 may include color number calculation 604 to calculate or compute the color number for each block. The color number is a count or a number of unique values in the block. Calculating or computing the color number for a block may include determining a number or a count of unique pixel values (e.g., luma/luminance values) in a block. A block may include 8x8 pixels = 64 pixels, and the color number may have a value of 1 to 64. A color number of 1 may mean that there is just one unique value in the block. A color number of 64 may mean that each value in the block is different/unique from each other.

The two or more statistics may include a variance. The variance is a statistical measure of how spread out the pixel values of a block are from the mean or average pixel value. Block-level statistics calculation 602 may include variance calculation 606. Calculating or computing the variance for a block may include determining an average squared deviation from a mean of pixel values of a block. In some cases, a standard deviation (e.g., a square root of the variance) of the block may be computed or calculated in variance calculation 606.

Content classifier 502 may include frame-level statistics calculation 610. Frame-level statistics calculation 610 may receive block-level statistics 690 from block-level statistics calculation 602. Based on block-level statistics 690, frame-level statistics calculation 610 may calculate frame-level statistics. In some embodiments, frame-level statistics calculation 610 may determine three or more frame-level statistics. The three or more frame-level statistics may help to identify the type of content present in the current video frame accurately. The three or more frame-level statistics may help to classify the type of content present in the current frame with good precision and recall. In some cases, the three or more statistics may already be available or calculated for other purposes in an encoder system. In some cases, the three or more statistics may be easily and quickly calculated without requiring heavy computations.

An insight behind the implementation of frame-level statistics calculation 610 is that strong screen content, when compared to natural content, may have one or more of the following frame-level characteristics: (1) more blocks which only have few colors, (2) more blocks with zero variance (artificially flat regions), and (3) more blocks with big variance (very sharp edges). Frame-level statistics calculation 610 may determine, based on block-level statistics 690, frame-level statistics 692, which may be used to help distinguish between different types of content accurately. For example, frame-level statistics calculation 610 may determine a first proportion of pixel blocks (**%CL**) of the current frame whose color number is less than a first number (**A**). Frame-level statistics calculation 610 may determine a second proportion of pixel blocks (**%ZV**) of the current frame whose variance is (or very close to) zero. Frame-level statistics calculation 610 may determine a third proportion of pixel blocks (**%BV**) of the current frame whose variance is greater than a second number (**B**). Frame-level statistics calculation 610 may output frame-level statistics 692.

The three or more statistics may include a first proportion of pixel blocks (**%CL**) of the current frame whose color number is less than a first number (**A**). The first proportion may measure how many blocks (**N1**) out of a total number of blocks (**M**) of the current frame have only a few colors or unique pixel values. The proportion may be measured as a fraction, a decimal number between 0 to 1, a percentage, etc. Frame-level statistics calculation 610 may include **%CL** calculation 612 to calculate the first proportion %CL. Calculating or computing **%CL** may include determining a number or count of blocks, based on block-level statistics 690, whose color number is less than **A**, and dividing the number/count by M. In some cases, the result may be multiplied by 100 to obtain a percentage. The first proportion of pixel blocks **%CL** may be calculated as: %CL= 100*N1/M

The three or more statistics may include a second proportion of pixel blocks (**%ZV**) of the current frame whose variance is zero. The second proportion may measure how many blocks (**N2**) out of a total number of blocks (**M**) of the current frame are artificially flat. The proportion may be measured as a fraction, a decimal number between 0 to 1, a percentage, etc. Frame-level statistics calculation 610 may include **%ZV** calculation 614 to calculate the second proportion **%ZV**. Calculating or computing **%ZV** may include determining a number or count of blocks, based on block-level statistics 690, whose variance is zero, and dividing the number/count by M. In some cases, the result may be multiplied by 100 to obtain a percentage. The second proportion of pixel blocks **%ZV** may be calculated as:

$$\%ZV= 100*N2/M$$

The three or more statistics may include a third proportion of pixel blocks (**%BV**) of the current frame whose variance is greater than a second number (**B**). The second proportion may measure how many blocks (**N3**) out of a total number of blocks (**M**) of the current frame have very sharp edges. The proportion may be measured as a fraction, a decimal number between 0 to 1, a percentage, etc. Frame-level statistics calculation 610 may include **%BV** calculation 616 to calculate the third proportion **%BV.** Calculating or computing **%BV** may include determining a number or count of blocks, based on block-level statistics 690, whose variance is larger than **B,** and dividing the number/count by M. In some cases, the result may be multiplied by 100 to obtain a percentage. The third proportion of pixel blocks **%BV** may be calculated as:

$$\%BV= 100*N3/M$$

In some embodiments, the first number **A** may be set to a value of 4. In some embodiments, the first number **A** may be set to a value of 2. In some embodiments, the second number **B** may be set to 60 (e.g., for 8-bit pixel values). In some embodiments, the second number **B** may be set to 120 (e.g., for 8-bit pixel values).

Content classifier 502 may include condition checker 680. Condition checker 680 may receive frame-level statistics 692, which may include the first proportion **%CL,** the second proportion **%ZV,** and the third proportion **%BV.** Specifically, condition checker 680 may check frame-level statistics 692 against the one or more conditions. Condition checker 680 may then use the results from checking frame-level statistics 692 against the one or more conditions to classify the current frame into a strong screen content classification, a weak screen content classification, or natural content classification. Condition checker 680 may classify the current frame into one of the three classifications based on the first proportion **%CL,** the second proportion **%ZV,** and the third proportion **%BV.** Condition checker 680 may check whether frame-level statistics 692 meets one or more conditions.

Condition checker 680 may check for one or more conditions that may indicate that the current frame has strong screen content. Condition checker 680 may include strong screen content condition checker 620 to check whether frame-level statistics 692 meets the one or more conditions that indicate that the current frame has strong screen content.

Condition checker 680 may check for one or more conditions that may indicate that the current frame has weak screen content. Condition checker 680 may include weak screen content condition checker 630 to check whether frame-level statistics 692 meets the one or more conditions that indicate that the current frame has weak screen content.

Condition checker 680 may check for one or more conditions that may indicate that the current frame has no screen content or natural content. Condition checker 680 may include natural content condition checker 640 to check whether frame-level statistics 692 meets the one or more conditions that indicate that the current frame has strong screen content.

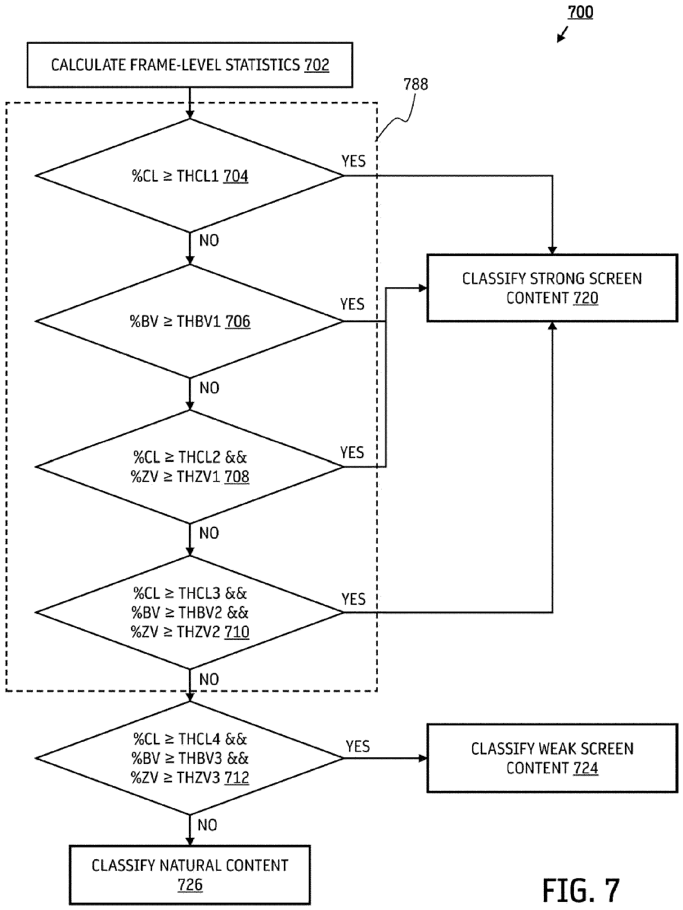

Exemplary conditions used in condition checker 680 are illustrated in FIG. 7. In some embodiments, the conditions are specified to identify frames which are likely to have strong screen content. Conditions which are stronger, or more likely indicators for strong screen content (e.g., conditions that clearly suggest the current frame has strong screen content) can be checked before other conditions which are weaker or less likely indicators for strong screen content.

FIG. 7 depicts an exemplary process 700 for classifying content, according to some embodiments of the disclosure. Process 700 may be performed by content classifier 502 of FIGS. 5-6.

In 702, frame-level statistics may be calculated. For example, frame-level statistics 692 may be calculated by block-level statistics calculation 602 and frame-level statistics calculation 610 of FIG. 6.

In 720, the current frame may be classified as strong screen content, or fall under the strong screen content classification.

In 724, the current frame may be classified as weak screen content, or fall under the weak screen content classification.

In 726, the current frame may be classified as natural content, or fall under the natural content classification.

Box 788 of process 700 includes one or more conditions, if any one or more conditions are met, would follow the "YES" paths to 720 and lead to the current frame being classified as strong screen content. The conditions may be arranged in the order of stronger indicators to weaker indicators. Condition checked in 704 may indicate a likely condition of strong screen content where many blocks have few colors. Condition checked in 706 may indicate a likely condition of strong screen content where many blocks have sharp edges.

In 704, strong screen content condition checker 620 of FIG. 6 may determine whether the first proportion **%CL** is greater than a first color number threshold **THCL1.** In response to determining that the first proportion **%CL** is greater than the first color number threshold **THCL1** (e.g., following the "YES" path from 704 to 720), strong screen content condition checker 620 may determine that the current frame falls under the strong screen content classification. In response to determining that the first proportion **%CL** is not greater than (e.g., less than or equal to) the first color number threshold **THCL1,** process 700 may follow the "NO" path from 704 to 706).

In 706, strong screen content condition checker 620 of FIG. 6 may determine whether the third proportion %BV is greater than a first big variance threshold **THBV1.** In response to determining that the third proportion **%BV** is greater than the first big variance threshold **THBV1** (e.g., following the "YES" path from 706 to 720), strong screen content condition checker 620 may determine that the current frame falls under the strong screen content classification. In response to determining that the third proportion **%BV** is not greater than (e.g., less than or equal to) the first big variance threshold **THBV1,** process 700 may follow the "NO" path from 706 to 708).

In 708, strong screen content condition checker 620 of FIG. 6 may determine whether the first proportion **%CL** is greater than a second color number threshold **THCL2** and whether the second proportion **%ZV** is greater than a first zero variance threshold **THZV1.** In response to determining that the first proportion **%CL** is greater than the second color number threshold **THCL2** and that the second proportion **%ZV** is greater than the first zero variance threshold **THZV1** (e.g., following the "YES" path from 708 to 720), strong screen content condition checker 620 may determine that the current frame falls under the strong screen content classification. In response to determining that the first proportion **%CL** is not greater than (e.g., less than or equal to) the second color number threshold **THCL2** and/or that the second proportion **%ZV** is not greater than (e.g., less than or equal to) the first zero variance threshold **THZV1,** process 700 may follow the "NO" path from 708 to 710). If (% CL $\geq$ THCL2 && %ZV $\geq$ THZV1) = TRUE, then process 700 may follow the "YES" path from 708 to 720. If (%CL $\geq$ THCL2 && %ZV $\geq$ THZV1) = FALSE, then process 700 may follow the "NO" path from 708 to 710.

In 708, strong screen content condition checker 620 of FIG. 6 may determine whether the first proportion **%CL** is greater than a third color number threshold **THCL3,** whether the third proportion **%BV** is greater than a second big variance threshold **TBV2,** and whether the second proportion **%ZV** is greater than a second zero variance threshold **TZV2.** In response to determining that the first proportion **%CL** is greater than the third color number threshold **THCL3,** that the third proportion **%BV** is greater than the second big variance threshold **TBV2,** and that the second proportion **%ZV** is greater than the second zero variance threshold **TZV2** (e.g., following the "YES" path from 710 to 720), strong screen content condition checker 620 may determine that the current frame falls under the strong screen content classification. In response to determining that the first proportion %CL is not greater than (e.g., less than or equal to) the third color number threshold **THCL3,** that the third proportion **%BV** is not greater than (e.g., less than or equal to) the second big variance threshold **TBV2,** and/or that the second proportion **%ZV** is not greater than (e.g., less than or equal to) the second zero variance threshold **TZV2,** process 700 may follow the "NO" path from 710 to 712). If (%CL $\geq$ THCL3 && %BV $\geq$ THBV2 && %ZV $\geq$

THZV2) = TRUE, then process 700 may follow the "YES" path from 710 to 720. If (%CL ≥ THCL3 && %BV ≥ THBV2 && %ZV ≥ THZV2) = FALSE, then process 700 may follow the "NO" path from 710 to 712.

In 712, weak screen content condition checker 630 of FIG. 6 may determine whether the first proportion **%CL** is greater than a fourth color number threshold **THCL4,** whether the third proportion **%BV** is greater than a third big variance threshold **THBV3,** and whether the second proportion %ZV is greater than a third zero variance threshold **THZV3**. In response to determining that the first proportion **%CL** is greater than the fourth color number threshold **THCL4,** that the third proportion **%BV** is greater than the third big variance threshold **THBV3,** and that the second proportion **%ZV** is greater than the third zero variance threshold **THZV3** (e.g., following the "YES" path from 712 to 724), weak screen content condition checker 630 may determine that the current frame falls under the weak screen content classification. In response to determining that the first proportion **%CL** is not greater than (e.g., less than or equal to) the fourth color number threshold **THCL4,** that the third proportion **%BV** is not greater than (e.g., less than or equal to) the third big variance threshold **THBV3,** and that the second proportion **%ZV** is not greater than (e.g., less than or equal to) the third zero variance threshold **THZV3,** process 700 may follow the "NO" path from 712 to 726). If (%CL ≥ THCL4 && %BV ≥ THBV3 && %ZV ≥ THZV3) = TRUE, then process 700 may follow the "YES" path from 710 to 720. If (%CL ≥ THCL4 && %BV ≥ THBV3 && %ZV ≥ THZV3) = FALSE, then process 700 may follow the "NO" path from 712 to 712.

As a result of checking whether the first proportion **%CL,** the second proportion **%ZV,** and the third proportion **%BV** meet one or more conditions that indicate strong screen content for the current frame (e.g., the condition(s) checked in 704, 706, 708, and 710), and one or more conditions that indicate weak screen content for the current frame (e.g., the condition(s) checked in 712), natural content condition checker 640 may determine whether the current frame has natural content. For example, in response to determining that the first proportion **%CL,** the second proportion **%ZV,** and the third proportion **%BV** do not meet the one or more conditions that indicate strong screen content for the current frame (e.g., the condition(s) checked in 704, 706, 708, and 710), and do not meet the one or more conditions that indicate weak screen content for the current frame (e.g., the condition(s) checked in 712), natural content condition checker 640 may determine the current frame falls under the natural content classification in 726.

Natural content condition checker 640 implementing a part of process 700 may not necessarily check for certain condition(s) that indicate natural content explicitly. The process 700 may make the determination that the current frame has natural content because the current frame is not otherwise classified to have strong screen content in 720 nor have weak screen content in 724.

The thresholds used may have one or more of the following relationships:

$$THCL1 > THCL2 > THCL3 > THCL4$$

$$THBV1 > THBV2 > THBV3$$

$$THZV1 > THZV2 > THZV3$$

*Coding tool control flag determination*

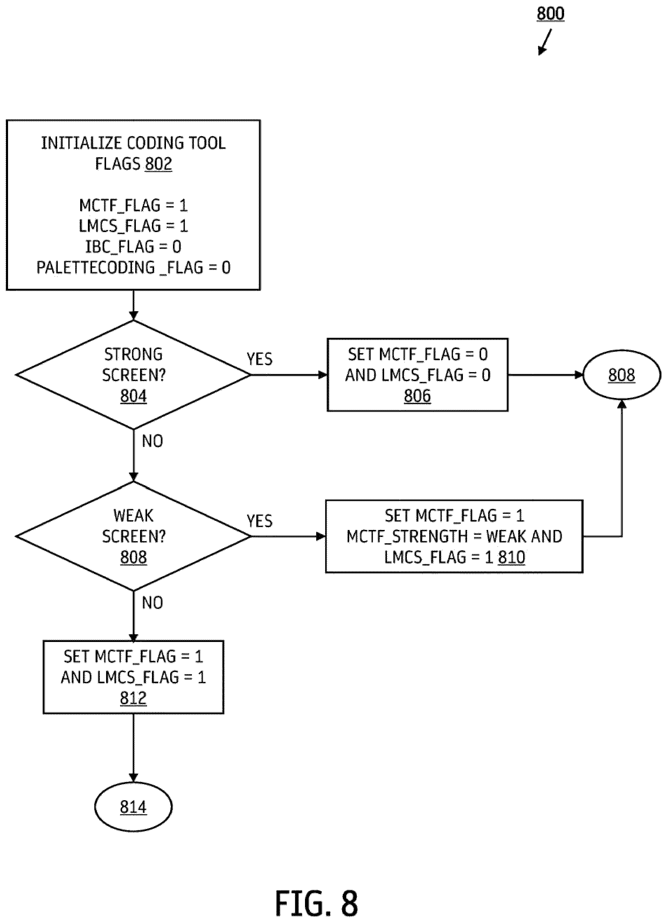

FIG. 8 depicts an exemplary process 800 for setting one or more coding tool control signals, according to some embodiments of the disclosure. Process 800 may be performed by coding tool control flag determination 504 of FIG. 5.

In 802, one or more coding tool control flags may be set to default values:

MCTF_FLAG = 1

LMCS_FLAG = 1

IBC_FLAG = 0

PALETTECODING_FLAG = 0

By default, MCTF and LMCS may be enabled and the control flags, **MCTF_FLAG** and **LMCS_FLAG,** may be set to have a value of 1. By default, IBC and palette coding may be disabled and the control flags, **IBC_FLAG** and **PALETTECODING _FLAG,** may be set to 0.

In 804, coding tool control flag determination 504 may determine whether the current frame has been classified under the strong screen content classification. If the current frame has been classified under the strong screen content classification, process 800 may follow the "YES" path from 804 to 806. If the current frame has not been classified under the strong screen content classification, process 800 may follow the "NO" path from 804 to 806.

In 806, coding tool control flag determination 504 may set the one or more coding tool control flags to one or more values that disable one or more of MCTF and LMCS for the current frame. Coding tool control flag determination 504 may set the one or more coding tool control flags to one or more values that disable both MCTF and LMCS for the current frame. Coding tool control flag determination 504 may set MCTF_FLAG = 0 and LMCS_FLAG = 0.

In 808, coding tool control flag determination 504 may determine whether the current frame has been classified under the weak screen content classification. If the current frame has been classified under the weak screen content classification, process 800 may follow the "YES" path from 808 to 810. If the current frame has not been classified under the weak screen content classification (or if the current frame has been classified under the natural content classification), process 800 may follow the "NO" path from 806 to 812.

In 810, coding tool control flag determination 504 may set the one or more coding tool control flags to one or more values that that enable one or more of MCTF at a weak strength and LMCS for the current frame. Coding tool control flag determination 504 may set the one or more coding tool control flags to one or more values that enable both MCTF at a weak strength and LMCS for the current frame. Coding tool control flag determination 504 may set MCTF_FLAG = 1, MCTF_STRENGTH = WEAK, and LMCS_FLAG = 1.

In 812, coding tool control flag determination 504 may, in response to classifying the current frame under the natural content classification, set the one or more coding tool control flags to one or more values that enable one or more of MCTF and LMCS for the current frame. Coding tool control flag determination 504 may, in response to classifying the current frame under the natural content classification, set the one or more coding tool control flags to one or more values that enable both MCTF and LMCS for the current frame. Coding tool control flag determination 504 may set MCTF_FLAG = 1 and LMCS_FLAG = 1.

After 806 and 810, the process 800 may proceed to 808. Proceeding to 808 means that the current frame has been classified under the strong screen content classification or the weak screen content classification.

After 812, the process 800 may proceed to 814. Proceeding to 814 means that the current frame has been classified under the natural content classification.

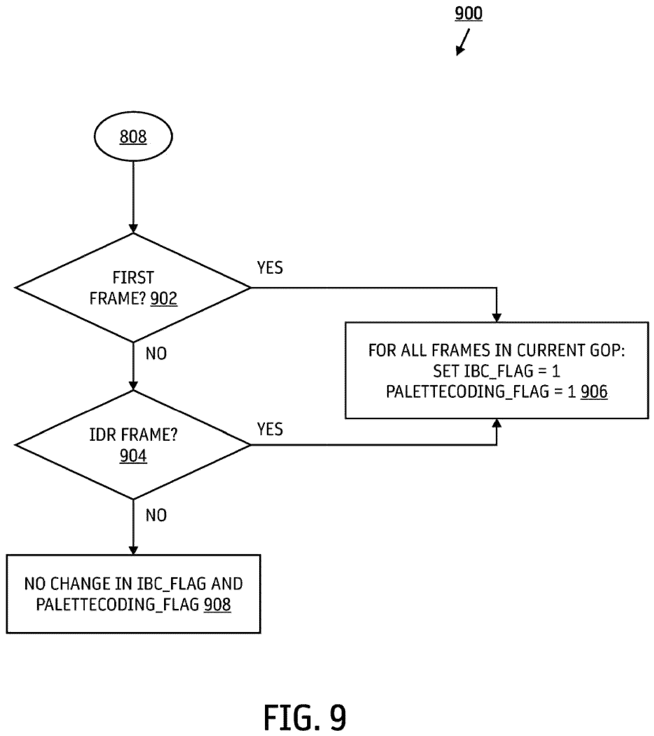

FIG. 9 depicts an exemplary process 900 for setting one or more coding tool control signals, according to some embodiments of the disclosure. Process 900 may be performed by coding tool control flag determination 504 of FIG. 5. Process 900 may begin at 808 from FIG. 8.

In 902, coding tool control flag determination 504 may determine whether the current frame is a first frame in a GOP, the GOP comprising the current frame. If the current frame is the first frame, process 900 may follow the "YES" path from 902 to 906. If the current frame is not the first frame, process 900 may follow the "NO" path from 902 to 904.

In 904, coding tool control flag determination 504 may determine whether the current frame is an IDR-frame. If the current frame is an IDR-frame, process 900 may follow the "YES" path from 904 to 906. If the current frame is not an IDR-frame (nor the first frame of a GOP), process 900 may follow the "NO" path from 904 to 908.

In 906, in response to determining that the current frame is the first frame in the GOP or an IDR-frame, coding tool control flag determination 504 may set the one or more coding tool control flags to one or more values that enable one or more of IBC and palette coding for all frames in the GOP. In response to determining that the current frame is the first frame in the GOP or an IDR-frame, coding tool control flag determination 504 may set the one or more coding tool control flags to one or more values that enable both IBC and palette coding for all frames in the GOP. Coding tool control flag determination 504 may set IBC_FLAG = 1, and PALETTECODING_FLAG = 1. Coding tool control flag determination 504 may enable or turn on IBC and palette coding for all the frames in the GOP. Coding tool control flag determination 504 may set one or more syntax elements in the sequence parameter set for the GOP to indicate that IBC and palette coding are turned on for all frames of the GOP.

In 908, in response in response to determining that the current frame is not the first frame in the GOP, and is not an IDR-frame, coding tool control flag determination 504 may leave the values of the one or more coding tool control flags, **IBC_FLAG** and **PALETTECODING_FLAG,** unchanged (or leave one or more coding tool control flags unchanged from default values).

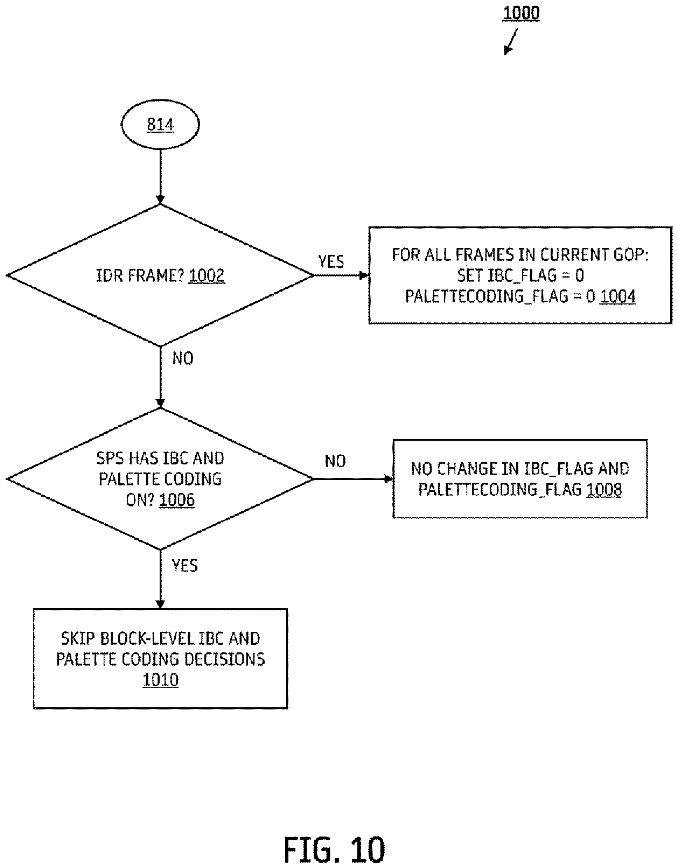

FIG. 10 depicts an exemplary process 1000 for setting one or more coding tool control signals, according to some embodiments of the disclosure. Process 1000 may be performed by coding tool control flag determination 504 of FIG. 5. Process 1000 may begin at 814 from FIG. 8.

In 1002, coding tool control flag determination 504 may determine whether the current frame is an IDR-frame. If the current frame is an IDR-frame, process 1000 may follow the "YES" path from 1002 to 1004. If the current frame is not an IDR-frame (nor the first frame of a GOP), process 900 may follow the "NO" path from 1002 to 1006.

In 1004, in response to determining that the current frame is an IDR-frame, coding tool control flag determination 504 may set the one or more coding tool control flags to one or more values that disable one or more of IBC and palette coding for all frames in the GOP. In response to determining that the current frame is an IDR-frame, coding tool control flag determination 504 may set the one or more coding tool control flags to one or more values that disable both IBC and palette coding for all frames in the GOP. Coding tool control flag determination 504 may set IBC_FLAG = 0, and PALETTECODING_FLAG = 0. Coding tool control flag determination 504 may disable or turn off IBC and palette coding for all the frames in the GOP. Coding tool control flag determination 504 may set one or more syntax elements in the sequence parameter set for the GOP to indicate that IBC and palette coding are turned off for all frames of the GOP.

In 1006, coding tool control flag determination 504 may determine whether the sequence parameter set of the current GOP indicates or signals that IBC and palette coding is already enabled or set to be on. In response to determining that the sequence parameter set indicates that IBC and palette coding are enabled (and that the current frame is not an IDR-frame), the process 1000 may follow the "YES" path from 1006 to 1008. In response to determining that the sequence parameter set indicates that IBC and palette coding not enabled (and that the current frame is not an IDR-frame), the process 1000 may follow the "NO" path from 1006 to 1010.

In 1008, in response to determining that the sequence parameter set indicates that IBC and palette coding not enabled (and that the current frame is not an IDR-frame), coding tool control flag determination 504 may leave the values of the one or more coding tool control flags, **IBC_FLAG** and **PALETTECODING_FLAG,** unchanged (or leave one or more coding tool control flags unchanged from default values).

In 1010, in response to determining that the sequence parameter set indicates that IBC and palette coding are enabled (and that the current frame is not an IDR-frame), coding tool control flag determination 504 may setting the one or more coding tool control flags to one or more values that (causes the encoder to) skip IBC and palette coding (decision making) for blocks of the current frame. Coding tool control flag determination 504 may skip all block-level IBC and palette coding decisions at the block-level for the current frame, even if IBC and palette coding is enabled at the GOP-level. Skipping all block-level IBC and palette coding decisions at the block-level for the current frame may mean that IBC and palette coding may not be selected as a predictor in intra-prediction for encoding the current frame. Skipping block-level IBC and palette coding decisions at the block-level for the current frame may help reduce complexity for intra-prediction to not consider IBC and palette coding decisions at least for the current frame while maintaining encoder quality since the current frame has been classified to have natural content.

While processes in FIGS. 8-10 illustrate jointly deciding on MCTF, LMCS, IBC, and palette coding based on the classification of the current frame, in some embodiments, one or more decisions relating to MCTF, LMCS, IBC, and palette coding can be decided independently and/or separately. In some embodiments, if the current frame uses all intra-coding to code the current frame, IBC may be enabled.

*Exemplary methods to adaptively control coding tools based on content classification*

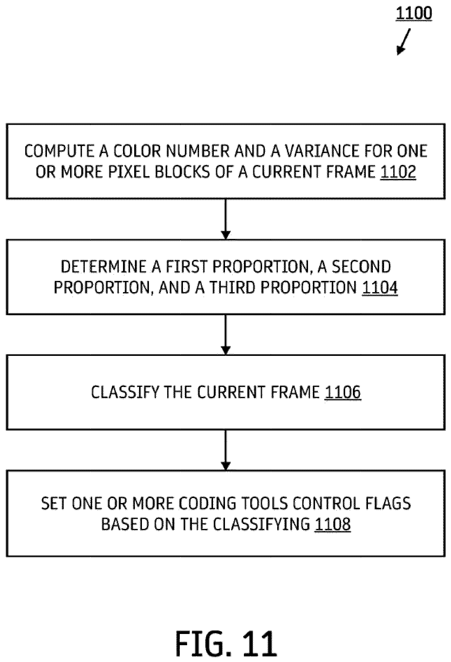

FIG. 11 illustrates method 1100 to adaptively control coding tools of an encoder based on content classification, according to some embodiments of the disclosure. Method 1100 may be performed by adaptive coding tool selector 402 of the FIGS.

In 1102, for one or more pixel blocks of a current frame, a color number and a variance may be computed. The one or more pixel blocks may be 8x8 pixels or larger in size. The color number and the variance may be computed for each pixel block of the current frame. The current frame may have a plurality of pixel blocks. In some cases, the color number and the variance may be computed for each pixel block of a subsampled set of pixel blocks of the current frame.

In 1104, a first proportion of pixel blocks of the current frame whose color number is less than a first number, a second proportion of pixel blocks of the current frame whose variance is zero, and a third proportion of pixel blocks of the current frame whose variance is greater than a second number may be determined.

In 1106, the current frame may be classified into a strong screen content classification, a weak screen content classification, or natural content classification based on the first proportion, the second proportion, and the third proportion.

In 1108, one or more coding tool control flags can be set based on the classifying, wherein the one or more coding tool control flags configure the one or more coding tools used by an encoding system.

*Exemplary computing device*

FIG. 12 is a block diagram of an apparatus or a system, e.g., an exemplary computing device 1200, according to some embodiments of the disclosure. One or more computing devices 1200 may be used to implement the functionalities described with the FIGS. and herein. A number of components are illustrated in the FIGS. can be included in the computing device 1200, but any one or more of these components may be omitted or duplicated, as suitable for the application. In some embodiments, some or all of the components included in the computing device 1200 may be attached to one or more motherboards. In some embodiments, some or all of these components are fabricated onto a single system on a chip (SoC) die. Additionally, in various embodiments, the computing device 1200 may not include one or more of the components illustrated in FIG. 12, and the computing device 1200 may include interface circuitry for coupling to the one or more components. For example, the computing device 1200 may not include a display device 1206, and may include display device interface circuitry (e.g., a connector and driver circuitry) to which a display device 1206 may be coupled. In another set of examples, the computing device 1200 may not include an audio input device 1218 or an audio output device 1208 and may include audio input or output device interface circuitry (e.g., connectors and supporting circuitry) to which an audio input device 1218 or audio output device 1208 may be coupled.

The computing device 1200 may include a processing device 1202 (e.g., one or more processing devices, one or more of the same type of processing device, one or more of different types of processing device). The processing device 1202 may include processing circuitry or electronic circuitry that process electronic data from data storage elements (e.g., registers, memory, resistors, capacitors, quantum bit cells) to transform that electronic data into other electronic data that may be stored in registers and/or memory. Examples of processing device 1202 may include a CPU, a GPU, a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1200 may include a memory 1204, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1204 includes one or more non-transitory computer-readable storage media. In some embodiments, memory 1204 may include memory that shares a die with the processing device 1202.

In some embodiments, memory 1204 includes one or more non-transitory computer-readable media storing instructions executable to perform operations described herein, such as operations illustrated in FIGS. 1-11, process 700, process 800, process 900, process 1000, and method 1100. In some embodiments, memory 1204 includes one or more non-transitory computer-readable media storing instructions executable to perform one or more operations of encoder 102. In some embodiments, memory 1204 includes one or more non-transitory computer-readable media storing instructions executable to perform one or more operations of pre-analysis 290. In some embodiments, memory 1204 includes one or more non-transitory computer-readable media storing instructions executable to perform one or more operations of adaptive coding tool selector 402. The instructions stored in memory 1204 may be executed by processing device 1202.

In some embodiments, memory 1204 may store data, e.g., data structures, binary data, bits, metadata, files, blobs, etc., as described with the FIGS. and herein. Memory 1204 may include one or more non-transitory computer-readable media storing one or more of: input frames to the encoder (e.g., video frames 104), intermediate data structures computed by the encoder, bitstream generated by the encoder (encoded bitstream 180), bitstream received by a decoder (encoded bitstream 180), intermediate data structures computed by the decoder, and reconstructed frames generated by the decoder. Memory 1204 may include one or more non-transitory computer-readable media storing one or more of: data received and/or data generated by pre-analysis 290. Memory 1204 may include one or more non-transitory computer-readable media storing one or more of: data received and/or data generated by adaptive coding tool selector 402. Memory 1204 may include one or more non-transitory computer-readable media storing one or more of: data received and/or data generated by process 700 of FIG. 7. Memory 1204 may include one or more non-transitory computer-readable media storing one or more of: data received and/or data generated by process 800 of FIG. 8. Memory 1204 may include one or more non-transitory computer-readable media storing one or more of: data received and/or data generated by process 900 of FIG. 9. Memory 1204 may include one or more non-transitory computer-readable media storing one or more of: data received and/or data generated by process 1000 of FIG. 10. Memory 1204 may include one or more non-transitory computer-readable media storing one or more of: data received and/or data generated by method 1100 of FIG. 11.

In some embodiments, the computing device 1200 may include a communication device 1212 (e.g., one or more communication devices). For example, the communication device 1212 may be configured for managing wired and/or wireless communications for the transfer of data to and from the computing device 1200. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1212 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1212 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1212 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1212 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 4G, 4G, 5G, and beyond. The communication device 1212 may operate in accordance with other wireless protocols in other embodiments. The computing device 1200 may include an antenna 1222 to facilitate wireless communications and/or to receive other wireless communications (such as radio frequency transmissions). Computing device 1200 may include receiver circuits and/or transmitter circuits. In some embodiments, the communication device 1212 may manage wired communications, such as electrical, optical, or any other suitable communication protocols (e.g., the Ethernet). As noted above, the communication device 1212 may include multiple communication chips. For instance, a first communication device 1212 may be dedicated to shorter-range wireless communications such as Wi-Fi or Bluetooth, and a second communication device 1212 may be dedicated to longer-range wireless communications such as global positioning system (GPS), EDGE, GPRS, CDMA, WiMAX, LTE, EV-DO, or others. In some embodiments, a first communication device 1212 may be dedicated to wireless communications, and a second communication device 1212 may be dedicated to wired communications.

The computing device 1200 may include power source / power circuitry 1214. The power source / power circuitry 1214 may include one or more energy storage devices (e.g., batteries or capacitors) and/or circuitry for coupling components of the computing device 1200 to an energy source separate from the computing device 1200 (e.g., DC power, AC power, etc.).

The computing device 1200 may include a display device 1206 (or corresponding interface circuitry, as discussed above). The display device 1206 may include any visual indicators, such as a heads-up display, a computer monitor, a projector, a touchscreen display, a liquid crystal display (LCD), a light-emitting diode display, or a flat panel display, for example.

The computing device 1200 may include an audio output device 1208 (or corresponding interface circuitry, as discussed above). The audio output device 1208 may include any device that generates an audible indicator, such as speakers, headsets, or earbuds, for example.

The computing device 1200 may include an audio input device 1218 (or corresponding interface circuitry, as discussed above). The audio input device 1218 may include any device that generates a signal representative of a sound, such as microphones, microphone arrays, or digital instruments (e.g., instruments having a musical instrument digital interface (MIDI) output).

The computing device 1200 may include a GPS device 1216 (or corresponding interface circuitry, as discussed above). The GPS device 1216 may be in communication with a satellite-based system and may receive a location of the computing device 1200, as known in the art.

The computing device 1200 may include a sensor 1230 (or one or more sensors). The computing device 1200 may include corresponding interface circuitry, as discussed above). Sensor 1230 may sense physical phenomenon and translate the physical phenomenon into electrical signals that can be processed by, e.g., processing device 1202. Examples of sensor 1230 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1200 may include another output device 1210 (or corresponding interface circuitry, as discussed above). Examples of the other output device 1210 may include an audio codec, a video codec, a printer, a wired or wireless transmitter for providing information to other devices, haptic output device, gas output device, vibrational output device, lighting output device, home automation controller, or an additional storage device.

The computing device 1200 may include another input device 1220 (or corresponding interface circuitry, as discussed above). Examples of the other input device 1220 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1200 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1200 may be any other electronic device that processes data.

### Select examples

Example 1 provides a method, including computing, for one or more pixel blocks of a current frame, a color number and a variance, where the one or more pixel blocks are 8x8 pixels or larger in size; determining a first proportion of pixel blocks of the current frame whose color number is less than a first number, a second proportion of pixel blocks of the current frame whose variance is zero, and a third proportion of pixel blocks of the current frame whose variance is greater than a second number; classifying the current frame into a strong screen content classification, a weak screen content classification, or natural content classification based on the first proportion, the second proportion, and the third proportion; and setting one or more coding tool control flags based on the classifying, where the one or more coding tool control flags configure one or more coding tools used by an encoding system.

Example 2 provides the method of example 1, where a pixel block of the one or more pixels blocks includes luminance values.

Example 3 provides the method of example 1 or 2, where: computing the color number includes determining a count of unique pixel values in a pixel block.

Example 4 provides the method of any one of examples 1-3, where classifying the current frame includes checking the first proportion, the second proportion, and the third proportion against one or more conditions that indicate strong screen content in the current frame, one or more conditions that indicate weak screen content in the current frame, and one or more conditions that indicate no screen content in the current frame.

Example 5 provides the method of any one of examples 1-4, where classifying the current frame includes determining whether the first proportion is greater than a first color number threshold; and in response to determining that the first proportion is greater than the first color number threshold, determining the current frame falls under the strong screen content classification.

Example 6 provides the method of any one of examples 1-5, where classifying the current frame includes determining whether the third proportion is greater than a first big variance threshold; and in response to determining that the third proportion is greater than the first big variance threshold, determining the current frame falls under the strong screen content classification.

Example 7 provides the method of any one of examples 1-6, where classifying the current frame includes determining whether the first proportion is greater than a second color number threshold and whether the second proportion is greater than a first zero variance threshold; and in response to determining that the first proportion is greater than the second color number threshold and that the second proportion is greater than the first zero variance threshold, determining the current frame falls under the strong screen content classification.

Example 8 provides the method of any one of examples 1-7, where classifying the current frame includes determining whether the first proportion is greater than a third color number threshold, whether the third proportion is greater than a second big variance threshold, and whether the second proportion is greater than a second zero variance threshold; and in response to determining that the first proportion is greater than the third color number threshold, that the third proportion is greater than the second big variance threshold, and that the second proportion is greater than the second zero variance threshold, determining the current frame falls under the strong screen content classification.

Example 9 provides the method of any one of examples 1-8, where classifying the current frame includes determining whether the first proportion is greater than a fourth color number threshold, whether the third proportion is greater than a third big variance threshold, and whether the second proportion is greater than a third zero variance threshold; and in response to determining that the first proportion is greater than the fourth color number threshold, that the third proportion is greater than the third big variance threshold, and that the second proportion is greater than the third zero variance threshold, determining the current frame falls under the weak screen content classification.

Example 10 provides the method of any one of examples 1-9, where classifying the current frame includes determining whether the first proportion, the second proportion, and the third proportion meet one or more conditions that indicate strong screen content for the current frame, and one or more conditions that indicate weak screen content for the current frame; and in response to determining that the first proportion, the second proportion, and the third proportion do not meet the one or more conditions that indicate strong screen content for the current frame, and do not meet the one or more conditions that indicate weak screen content for the current frame, determining the current frame falls under the natural content classification.

Example 11 provides the method of any one of examples 1-10, where setting the one or more coding tool control flags includes in response to classifying the current frame under the strong screen content classification, setting the one or more coding tool control flags to one or more values that disable motion compensated temporal filter and luma mapping with chroma scaling for the current frame.

Example 12 provides the method of any one of examples 1-11, where setting the one or more coding tool control flags includes in response to classifying the current frame under the weak screen content classification, setting the one or more coding tool control flags to one or more values that enable motion compensated temporal filter at a weak strength and luma mapping with chroma scaling for the current frame.

Example 13 provides the method of any one of examples 1-12, where setting the one or more coding tool control flags includes in response to classifying the current frame under the natural content classification, setting the one or more coding tool control flags to one or more values that enable motion compensated temporal filter and luma mapping with chroma scaling for the current frame.

Example 14 provides the method of any one of examples 1-13, where setting the one or more coding tool control flags includes in response to classifying the current frame under the strong screen content classification, or the weak screen content classification: determining whether the current frame is a first frame in a group of pictures or an instantaneous decoder refresh frame, the group of pictures including the current frame; and in response to determining that the current frame is the first frame in the group of pictures or the instantaneous decoder refresh frame, setting the one or more coding tool control flags to one or more values that enable intra block copy and palette coding for all frames in the group of pictures.

Example 15 provides the method of any one of examples 1-14, where setting the one or more coding tool control flags includes in response to classifying the current frame under the natural content classification: determining whether the current frame is an instantaneous decoder refresh frame; and in response to determining that the current frame is the instantaneous decoder refresh frame, setting the one or more coding tool control flags to one or more values that disable intra block copy and palette coding for all frames in a group of pictures, the group of pictures including the current frame.

Example 16 provides the method of any one of examples 1-15, where setting the one or more coding tool control flags includes in response to classifying the current frame under the natural content classification: determining whether the current frame is not an instantaneous decoder refresh frame and whether a sequence parameter set indicates intra block copy and palette coding are enabled; and in response to determining that the current frame is not the instantaneous decoder refresh frame and that the sequence parameter set indicates intra block copy and palette coding are enabled, setting the one or more coding tool control flags to one or more values that skip intra block copy and palette coding for blocks of the current frame.

Example 17 provides one or more non-transitory computer-readable media storing instructions that, when executed by one or more processors, cause the one or more processors to: compute, for one or more pixel blocks of a current frame, a color number and a variance, where the one or more pixel blocks are 8x8 pixels or larger in size; determine a first proportion of pixel blocks of the current frame whose color number is less than a first number, a second proportion of pixel blocks of the current frame whose variance is zero, and a third proportion of pixel blocks of the current frame whose variance is greater than a second number; classify the current frame into a strong screen content classification, a weak screen content classification, or natural content classification based on the first proportion, the second proportion, and the third proportion; and set one or more coding tool control flags based on the classifying, where the one or more coding tool control flags configure one or more coding tools used by an encoding system.

Example 18 provides the one or more non-transitory computer-readable media of example 17, where a pixel block of the one or more pixels blocks includes luminance values.

Example 19 provides the one or more non-transitory computer-readable media of example 17 or 18, where: computing the color number includes determining a count of unique pixel values in a pixel block.

Example 20 provides the one or more non-transitory computer-readable media of any one of examples 17-19, where classifying the current frame includes checking the first proportion, the second proportion, and the third proportion against one or more conditions that indicate strong screen content in the current frame, one or more conditions that indicate weak screen content in the current frame, and one or more conditions that indicate no screen content in the current frame.

Example 21 provides the one or more non-transitory computer-readable media of any one of examples 17-20, where classifying the current frame includes determining whether the first proportion is greater than a first color number threshold; and in response to determining that the first proportion is greater than the first color number threshold, determining the current frame falls under the strong screen content classification.

Example 22 provides the one or more non-transitory computer-readable media of any one of examples 17-21, where classifying the current frame includes determining whether the third proportion is greater than a first big variance threshold; and in response to determining that the third proportion is greater than the first big variance threshold, determining the current frame falls under the strong screen content classification.

Example 23 provides the one or more non-transitory computer-readable media of any one of examples 17-22, where classifying the current frame includes determining whether the first proportion is greater than a second color number threshold and whether the second proportion is greater than a first zero variance threshold; and in response to determining that the first proportion is greater than the second color number threshold and that the second proportion is greater than the first zero variance threshold, determining the current frame falls under the strong screen content classification.

Example 24 provides the one or more non-transitory computer-readable media of any one of examples 17-23, where classifying the current frame includes determining whether the first proportion is greater than a third color number threshold, whether the third proportion is greater than a second big variance threshold, and whether the second proportion is greater than a second zero variance threshold; and in response to determining that the first proportion is greater than the third color number threshold, that the third proportion is greater than the second big variance threshold, and that the second proportion is greater than the second zero variance threshold, determining the current frame falls under the strong screen content classification.

Example 25 provides the one or more non-transitory computer-readable media of any one of examples 17-24, where classifying the current frame includes determining whether the first proportion is greater than a fourth color number threshold, whether the third proportion is greater than a third big variance threshold, and whether the second proportion is greater than a third zero variance threshold; and in response to determining that the first proportion is greater than the fourth color number threshold, that the third proportion is greater than the third big variance threshold, and that the second proportion is greater than the third zero variance threshold, determining the current frame falls under the weak screen content classification.

Example 26 provides the one or more non-transitory computer-readable media of any one of examples 17-25, where classifying the current frame includes determining whether the first proportion, the second proportion, and the third proportion meet one or more conditions that indicate strong screen content for the current frame, and one or more conditions that indicate weak screen content for the current frame; and in response to determining that the first proportion, the second proportion, and the third proportion do not meet the one or more conditions that indicate strong screen content for the current frame, and do not meet the one or more conditions that indicate weak screen content for the current frame, determining the current frame falls under the natural content classification.

Example 27 provides the one or more non-transitory computer-readable media of any one of examples 17-26, where setting the one or more coding tool control flags includes in response to classifying the current frame under the strong screen content classification, setting the one or more coding tool control flags to one or more values that disable motion compensated temporal filter and luma mapping with chroma scaling for the current frame.

Example 28 provides the one or more non-transitory computer-readable media of any one of examples 17-27, where setting the one or more coding tool control flags includes in response to classifying the current frame under the weak screen content classification, setting the one or more coding tool control flags to one or more values that enable motion compensated temporal filter at a weak strength and luma mapping with chroma scaling for the current frame.

Example 29 provides the one or more non-transitory computer-readable media of any one of examples 17-28, where setting the one or more coding tool control flags includes in response to classifying the current frame under the natural content classification, setting the one or more coding tool control flags to one or more values that enable motion compensated temporal filter and luma mapping with chroma scaling for the current frame.

Example 30 provides the one or more non-transitory computer-readable media of any one of examples 17-29, where setting the one or more coding tool control flags includes in response to classifying the current frame under the strong screen content classification, or the weak screen content classification: determining whether the current frame is a first frame in a group of pictures or an instantaneous decoder refresh frame, the group of pictures including the current frame; and in response to determining that the current frame is the first frame in the group of pictures or the instantaneous decoder refresh frame, setting the one or more coding tool control flags to one or more values that enable intra block copy and palette coding for all frames in the group of pictures.

Example 31 provides the one or more non-transitory computer-readable media of any one of examples 17-30, where setting the one or more coding tool control flags includes in response to classifying the current frame under the natural content classification: determining whether the current frame is an instantaneous decoder refresh frame; and in response to determining that the current frame is the instantaneous decoder refresh frame, setting the one or more coding tool control flags to one or more values that disable intra block copy and palette coding for all frames in a group of pictures, the group of pictures including the current frame.

Example 32 provides the one or more non-transitory computer-readable media of any one of examples 17-31, where setting the one or more coding tool control flags includes in response to classifying the current frame under the natural content classification: determining whether the current frame is not an instantaneous decoder refresh frame and whether a sequence parameter set indicates intra block copy and palette coding are enabled; and in response to determining that the current frame is not the instantaneous decoder refresh frame and that the sequence parameter set indicates intra block copy and palette coding are enabled, setting the one or more coding tool control flags to one or more values that skip intra block copy and palette coding for blocks of the current frame.

Example 33 provides a system, including one or more processors; and one or more non-transitory computer-readable media storing instructions that, when executed by the one or more processors, cause the one or more processors to: compute, for one or more pixel blocks of a current frame, a color number and a variance, where the one or more pixel blocks are 8x8 pixels or larger in size; determine a first proportion of pixel blocks of the current frame whose color number is less than a first number, a second proportion of pixel blocks of the current frame whose variance is zero, and a third proportion of pixel blocks of the current frame whose variance is greater than a second number; classify the current frame into a strong screen content classification, a weak screen content classification, or natural content classification based on the first proportion, the second proportion, and the third proportion; and set one or more coding tool control flags based on the classifying, where the one or more coding tool control flags configure one or more coding tools used by an encoding system.

Example 34 provides the system of example 33, where a pixel block of the one or more pixels blocks includes luminance values.

Example 35 provides the system of example 33 or 34, where: computing the color number includes determining a count of unique pixel values in a pixel block.

Example 36 provides the system of any one of examples 33-35, where classifying the current frame includes checking the first proportion, the second proportion, and the third proportion against one or more conditions that indicate strong screen content in the current frame, one or more conditions that indicate weak screen content in the current frame, and one or more conditions that indicate no screen content in the current frame.

Example 37 provides the system of any one of examples 33-36, where classifying the current frame includes determining whether the first proportion is greater than a first color number threshold; and in response to determining that the first proportion is greater than the first color number threshold, determining the current frame falls under the strong screen content classification.

Example 38 provides the system of any one of examples 33-37, where classifying the current frame includes determining whether the third proportion is greater than a first big variance threshold; and in response to determining that the third proportion is greater than the first big variance threshold, determining the current frame falls under the strong screen content classification.

Example 39 provides the system of any one of examples 33-38, where classifying the current frame includes determining whether the first proportion is greater than a second color number threshold and whether the second proportion is greater than a first zero variance threshold; and in response to determining that the first proportion is greater than the second color number threshold and that the second proportion is greater than the first zero variance threshold, determining the current frame falls under the strong screen content classification.

Example 40 provides the system of any one of examples 33-39, where classifying the current frame includes determining whether the first proportion is greater than a third color number threshold, whether the third proportion is greater than a second big variance threshold, and whether the second proportion is greater than a second zero variance threshold; and in response to determining that the first proportion is greater than the third color number threshold, that the third proportion is greater than the second big variance threshold, and that the second proportion is greater than the second zero variance threshold, determining the current frame falls under the strong screen content classification.

Example 41 provides the system of any one of examples 33-40, where classifying the current frame includes determining whether the first proportion is greater than a fourth color number threshold, whether the third proportion is greater than a third big variance threshold, and whether the second proportion is greater than a third zero variance threshold; and in response to determining that the first proportion is greater than the fourth color number threshold, that the third proportion is greater than the third big variance threshold, and that the second proportion is greater than the third zero variance threshold, determining the current frame falls under the weak screen content classification.

Example 42 provides the system of any one of examples 33-41, where classifying the current frame includes determining whether the first proportion, the second proportion, and the third proportion meet one or more conditions that indicate strong screen content for the current frame, and one or more conditions that indicate weak screen content for the current frame; and in response to determining that the first proportion, the second proportion, and the third proportion do not meet the one or more conditions that indicate strong screen content for the current frame, and do not meet the one or more conditions that indicate weak screen content for the current frame, determining the current frame falls under the natural content classification.

Example 43 provides the system of any one of examples 33-42, where setting the one or more coding tool control flags includes in response to classifying the current frame under the strong screen content classification, setting the one or more coding tool control flags to one or more values that disable motion compensated temporal filter and luma mapping with chroma scaling for the current frame.

Example 44 provides the system of any one of examples 33-43, where setting the one or more coding tool control flags includes in response to classifying the current frame under the weak screen content classification, setting the one or more coding tool control flags to one or more values that enable motion compensated temporal filter at a weak strength and luma mapping with chroma scaling for the current frame.

Example 45 provides the system of any one of examples 33-44, where setting the one or more coding tool control flags includes in response to classifying the current frame under the natural content classification, setting the one or more coding tool control flags to one or more values that enable motion compensated temporal filter and luma mapping with chroma scaling for the current frame.

Example 46 provides the system of any one of examples 33-45, where setting the one or more coding tool control flags includes in response to classifying the current frame under the strong screen content classification, or the weak screen content classification: determining whether the current frame is a first frame in a group of pictures or an instantaneous decoder refresh frame, the group of pictures including the current frame; and in response to determining that the current frame is the first frame in the group of pictures or the instantaneous decoder refresh frame, setting the one or more coding tool control flags to one or more values that enable intra block copy and palette coding for all frames in the group of pictures.

Example 47 provides the system of any one of examples 33-46, where setting the one or more coding tool control flags includes in response to classifying the current frame under the natural content classification:

determining whether the current frame is an instantaneous decoder refresh frame; and in response to determining that the current frame is the instantaneous decoder refresh frame, setting the one or more coding tool control flags to one or more values that disable intra block copy and palette coding for all frames in a group of pictures, the group of pictures including the current frame.

Example 48 provides the system of any one of examples 33-47, where setting the one or more coding tool control flags includes in response to classifying the current frame under the natural content classification: determining whether the current frame is not an instantaneous decoder refresh frame and whether a sequence parameter set indicates intra block copy and palette coding are enabled; and in response to determining that the current frame is not the instantaneous decoder refresh frame and that the sequence parameter set indicates intra block copy and palette coding are enabled, setting the one or more coding tool control flags to one or more values that skip intra block copy and palette coding for blocks of the current frame.

Example A provides an apparatus comprising means to carry out or means for carrying out any one of the methods provided in examples 1-16 and methods/processes described herein.

Example B provides one or more non-transitory computer-readable media storing instructions that, when executed by one or more processors, cause the one or more processors to perform any one of the methods provided in examples 1-16 and methods/processes described herein.

Example C provides an apparatus, comprising: one or more processors to execute instructions, and one or more non-transitory computer-readable media storing the instructions that, when executed by one or more processors, cause the one or more processors to perform any one of the methods provided in examples 1-16 and methods/processes described herein.

Example D provides an encoder system to generate an encoded bitstream using operations described herein.

Example E provides an encoder system to perform any one of the methods provided in examples 1-16 and methods/processes described herein.

Example F provides pre-analysis 290 as described herein.

Example G provides adaptive coding tool selection 402 as described herein.

Example H provides pre-analysis 290 and encoder 102 as described herein.

*Variations and other notes*

Although the operations of the example method shown in and described with reference to FIGS. 7-11 are illustrated as occurring once each and in a particular order, it will be recognized that some operations may be performed in any suitable order and repeated as desired. Additionally, one or more operations may be performed in parallel. Furthermore, the operations illustrated in FIGS. 7-11 or other FIGS. may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

For the purposes of the present disclosure, "A is less than or equal to a first threshold" is equivalent to "A is less than a second threshold" provided that the first threshold and the second thresholds are set in a manner so that both statements result in the same logical outcome for any value of A. For the purposes of the present disclosure, "B is greater than a first threshold" is equivalent to "B is greater than or equal to a second threshold" provided that the first threshold and the second thresholds are set in a manner so that both statements result in the same logical outcome for any value of B.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

**Claims**

**1.** A method, comprising:

computing, for one or more pixel blocks of a current frame, a color number and a variance, wherein the one or more pixel blocks are 8x8 pixels or larger in size;
determining a first proportion of pixel blocks of the current frame whose color number is less than a first number, a second proportion of pixel blocks of the current frame whose variance is zero, and a third proportion of pixel blocks of the current frame whose variance is greater than a second number;
classifying the current frame into a strong screen content classification, a weak screen content classification, or natural content classification based on the first proportion, the second proportion, and the third proportion; and
setting one or more coding tool control flags based on the classifying, wherein the one or more coding tool control flags configure one or more coding tools used by an encoding system.

**2.** The method of claim 1, wherein a pixel block of the one or more pixels blocks comprises luminance values.

**3.** The method of claim 1 or 2, wherein:
computing the color number comprises determining a count of unique pixel values in a pixel block.

**4.** The method of any one of claims 1-3, wherein classifying the current frame comprises:
checking the first proportion, the second proportion, and the third proportion against one or more conditions that indicate strong screen content in the current frame, one or more conditions that indicate weak screen content in the current frame, and one or more conditions that indicate no screen content in the current frame.

**5.** The method of any one of claims 1-4, wherein classifying the current frame comprises:

determining whether the first proportion is greater than a first color number threshold; and
in response to determining that the first proportion is greater than the first color number threshold, determining the current frame falls under the strong screen content classification.

**6.** The method of any one of claims 1-5, wherein classifying the current frame comprises:

determining whether the third proportion is greater than a first big variance threshold; and
in response to determining that the third proportion is greater than the first big variance threshold, determining the current frame falls under the strong screen content classification.

**7.** The method of any one of claims 1-6, wherein classifying the current frame comprises:

determining whether the first proportion is greater than a second color number threshold and whether the second proportion is greater than a first zero variance threshold; and
in response to determining that the first proportion is greater than the second color number threshold and that the second proportion is greater than the first zero variance threshold, determining the current frame falls under the strong screen content classification.

**8.** The method of any one of claims 1-7, wherein classifying the current frame comprises:

determining whether the first proportion is greater than a third color number threshold, whether the third proportion is greater than a second big variance threshold, and whether the second proportion is greater than a second zero variance threshold; and
in response to determining that the first proportion is greater than the third color number threshold, that the third proportion is greater than the second big variance threshold, and that the second proportion is greater than the second zero variance threshold, determining the current frame falls under the strong screen content classification.

**9.** The method of any one of claims 1-8, wherein classifying the current frame comprises:

determining whether the first proportion is greater than a fourth color number threshold, whether the third proportion is greater than a third big variance threshold, and whether the second proportion is greater than a third zero variance threshold; and
in response to determining that the first proportion is greater than the fourth color number threshold, that the third proportion is greater than the third big variance threshold, and that the second proportion is greater than the third zero variance threshold, determining the current frame falls under the weak screen content classification.

**10.** The method of any one of claims 1-9, wherein classifying the current frame comprises:

determining whether the first proportion, the second proportion, and the third proportion meet one or more conditions that indicate strong screen content for the current frame, and one or more conditions that indicate weak screen content for the current frame; and
in response to determining that the first proportion, the second proportion, and the third proportion do not meet the one or more conditions that indicate strong screen content for the current frame, and do not meet the one or more conditions that indicate weak screen content for the current frame, determining the current frame falls under the natural content classification.

**11.** The method of any one of claims 1-10, wherein setting the one or more coding tool control flags comprises one or more of the following:

(1) in response to classifying the current frame under the strong screen content classification, setting the one or more coding tool control flags to one or more values that disable motion compensated temporal filter and luma mapping with chroma scaling for the current frame;
(2) in response to classifying the current frame under the weak screen content classification, setting the one or more coding tool control flags to one or more values that enable motion compensated temporal filter at a weak strength and luma mapping with chroma scaling for the current frame;
(3) in response to classifying the current frame under the natural content classification, setting the one or more coding tool control flags to one or more values that enable motion compensated temporal filter and luma mapping with chroma scaling for the current frame;
(4) in response to classifying the current frame under the strong screen content classification, or the weak screen content classification:

determining whether the current frame is a first frame in a group of pictures or an instantaneous decoder refresh frame, the group of pictures comprising the current frame; and
in response to determining that the current frame is the first frame in the group of pictures or the instantaneous decoder refresh frame, setting the one or more coding tool control flags to one or more values that enable intra block copy and palette coding for all frames in the group of pictures;

(5) in response to classifying the current frame under the natural content classification:

determining whether the current frame is an instantaneous decoder refresh frame; and
in response to determining that the current frame is the instantaneous decoder refresh frame, setting the one or more coding tool control flags to one or more values that disable intra block copy and palette coding for all frames in a group of pictures, the group of pictures comprising the current frame; and

(6) in response to classifying the current frame under the natural content classification:

determining whether the current frame is not an instantaneous decoder refresh frame and whether a sequence parameter set indicates intra block copy and palette coding are enabled; and

in response to determining that the current frame is not the instantaneous decoder refresh frame and that the sequence parameter set indicates intra block copy and palette coding are enabled, setting the one or more coding tool control flags to one or more values that skip intra block copy and palette coding for blocks of the current frame.

12. One or more non-transitory computer-readable media storing instructions that, when executed by one or more processors, cause the one or more processors to perform a method as claimed in any one of the preceding claims.

13. A system, comprising:

one or more processors; and
one or more non-transitory computer-readable media storing instructions that, when executed by the one or more processors, cause the one or more processors to perform a method as claimed in any one of claims 1-11.

14. An apparatus comprising means to perform a method as claimed in any one of claims 1-11.

15. A computer program comprising instructions, which, when the program is executed by a computer, cause the computer to carry out the method as claimed in any one of claims 1-11.

ENCODING SYSTEM 130

VIDEO FRAMES 104

ENCODER 102

ENCODED BITSTREAM 180 (e.g., 0 1 0 1 1 0...)

NETWORK 140

ENCODED BITSTREAM 180 (e.g., 0 1 0 1 1 0...)

DECODER 1 $162_1$

DISPLAY DEVICE 1 $164_1$

DECODING SYSTEM 1 $150_1$

$168_1$

DECODER 2 $162_2$

DISPLAY DEVICE 2 $164_2$

DECODING SYSTEM 2 $150_2$

$168_2$

DECODER D $162_D$

DISPLAY DEVICE D $164_D$

DECODING SYSTEM D $150_D$

$168_D$

FIG. 1

FIG. 2

FIG. 3

ENCODING SYSTEM 130

VIDEO FRAMES 104

ENCODED BITSTREAM 180 (e.g., 0 1 0 1 1 0...)

ADAPTIVE CODING TOOL SELECTOR 402

ENCODER 102

MCTF 406

CODING TOOL CONTROL FLAG(S) 404

PRE-ANALYSIS 290

FIG. 4

VIDEO FRAMES 104

ADAPTIVE CODING TOOL SELECTOR 402

CONTENT CLASSIFIER 502

CONTENT CLASSIFICATION 510

CODING TOOL CONTROL FLAG DETERMINATION 504

CODING TOOL CONTROL FLAG(S) 404

FIG. 5

**CONTENT CLASSIFIER 502**

BLOCK-LEVEL STATISTICS CALCULATION 602

COLOR NUMBER CALCULATION 604

VARIANCE CALCULATION 606

BLOCK-LEVEL STATISTICS 690

FRAME-LEVEL STATISTICS CALCULATION 610

%CL CALCULATION 612

%ZV CALCULATION 614

%BV CALCULATION 616

FRAME-LEVEL STATISTICS 692

CONDITION CHECKER 680

STRONG SCREEN CONTENT CONDITION CHECKER 620

WEAK SCREEN CONTENT CONDITION CHECKER 630

NATURAL CONTENT CONDITION CHECKER 640

VIDEO FRAMES 104

CONTENT CLASSIFICATION 510

FIG. 6

32

700

CALCULATE FRAME-LEVEL STATISTICS 702

788

%CL ≥ THCL1 704 — YES → CLASSIFY STRONG SCREEN CONTENT 720

NO

%BV ≥ THBV1 706 — YES → CLASSIFY STRONG SCREEN CONTENT 720

NO

%CL ≥ THCL2 && %ZV ≥ THZV1 708 — YES → CLASSIFY STRONG SCREEN CONTENT 720

NO

%CL ≥ THCL3 && %BV ≥ THBV2 && %ZV ≥ THZV2 710 — YES → CLASSIFY STRONG SCREEN CONTENT 720

NO

%CL ≥ THCL4 && %BV ≥ THBV3 && %ZV ≥ THZV3 712 — YES → CLASSIFY WEAK SCREEN CONTENT 724

NO

CLASSIFY NATURAL CONTENT 726

FIG. 7

**FIG. 8**

**FIG. 9**

1000

814

IDR FRAME? 1002 → YES → FOR ALL FRAMES IN CURRENT GOP:
SET IBC_FLAG = 0
PALETTECODING_FLAG = 0 1004

NO

SPS HAS IBC AND
PALETTE CODING
ON? 1006 → NO → NO CHANGE IN IBC_FLAG AND
PALETTECODING_FLAG 1008

YES

SKIP BLOCK-LEVEL IBC AND
PALETTE CODING DECISIONS
1010

FIG. 10

1100

COMPUTE A COLOR NUMBER AND A VARIANCE FOR ONE
OR MORE PIXEL BLOCKS OF A CURRENT FRAME 1102

DETERMINE A FIRST PROPORTION, A SECOND
PROPORTION, AND A THIRD PROPORTION 1104

CLASSIFY THE CURRENT FRAME 1106

SET ONE OR MORE CODING TOOLS CONTROL FLAGS
BASED ON THE CLASSIFYING 1108

FIG. 11

COMPUTING DEVICE 1200

MEMORY 1204

104    180

PRE-ANALYSIS 290    700

ADAPTIVE
CODING
TOOL SELECTION
402

1000

ENCODER
102

800

1100

900

PROCESSING DEVICE
1202

ANTENNA 1222

COMMUNICATION DEVICE
1212

DISPLAY DEVICE
1206

GPS DEVICE
1216

POWER
SOURCE /
POWER
CIRCUITRY
1214

AUDIO OUTPUT DEVICE
1208

AUDIO INPUT DEVICE
1218

OTHER OUTPUT DEVICE
1210

OTHER INPUT DEVICE
1220

SENSOR
1230

FIG. 12

Europäisches
Patentamt

European
Patent Office

Office européen
des brevets

# EUROPEAN SEARCH REPORT

**Application Number**

EP 25 15 8688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2018/262760 A1 (ZHANG XIMIN [US] ET AL) 13 September 2018 (2018-09-13) * paragraphs [0026], [0027], [0030] - [0035], [0038]; figures 1, 2, 4 * | 1-15 | INV. H04N19/103 H04N19/14 H04N19/176 H04N19/186 |
| Y | HELMRICH CHRISTIAN R ET AL: "Finalization of VVenC's Screen Content Detector and Two-Pass Rate Control Using Pre-Filtering Statistics", 2023 IEEE INTERNATIONAL CONFERENCE ON IMAGE PROCESSING (ICIP), IEEE, 8 October 2023 (2023-10-08), pages 1160-1164, XP034467212, DOI: 10.1109/ICIP49359.2023.10223193 [retrieved on 2023-09-11] * Sec. 1.1 * | 1-15 | H04N19/27 H04N19/46 H04N19/61 |
| A | ANNA MEYER ET AL: "Learned Wavelet Video Coding using Motion Compensated Temporal Filtering", ARXIV.ORG, CORNELL UNIVERSITY LIBRARY, 201 OLIN LIBRARY CORNELL UNIVERSITY ITHACA, NY 14853, 25 May 2023 (2023-05-25), XP091519321, * abstract * | 11 | |
| A | UDDEHAL SHABHRISH REDDY ET AL: "Image Segmentation for Improved Lossless Screen Content Compression", ICASSP 2023 - 2023 IEEE INTERNATIONAL CONFERENCE ON ACOUSTICS, SPEECH AND SIGNAL PROCESSING (ICASSP), IEEE, 4 June 2023 (2023-06-04), pages 1-5, XP034451047, DOI: 10.1109/ICASSP49357.2023.10094983 [retrieved on 2023-05-05] * Sec. 3.1 * | 1-15 | |

**TECHNICAL FIELDS SEARCHED (IPC)**

H04N

The present search report has been drawn up for all claims

| Place of search | Date of completion of the search | Examiner |
|---|---|---|
| The Hague | 14 August 2025 | Satti, Shahid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 8688

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2025

| Patent document cited in search report | Publication date | Patent family member(s) | Publication date |
|---|---|---|---|
| US 2018262760 A1 | 13-09-2018 | NONE | |

EPO FORM P0459